# EUROPEAN PATENT APPLICATION

(11) **EP 4 672 812 A1**
(43) Date of publication of application: **31.12.2025**
(21) Application number: 24784165.3
(22) Date of filing: 28.03.2024
(51) Int. Cl.: H04W 28/14

(54) **COMMUNICATION METHOD AND RELATED APPARATUS**

(30) Priority: 07.04.2023 CN 202310398548
(71) Applicant: HUAWEI TECHNOLOGIES CO., LTD., Shenzhen, Guangdong 518129 (CN)
(72) Inventor: PAN, Qi, Shenzhen, Guangdong 518129 (CN)
(74) Representative: Maiwald GmbH
(86) International application number: PCT/CN2024/084442
(87) International publication number: WO 2024/208080

(57) **Abstract**

Embodiments of this application provide a communication method and a related apparatus. The communication method includes: learning that a terminal device enters an inactive state and that a radio access type of the terminal device is a first radio access type; and determining, based on an extended buffering capability of a service session management network element and/or an extended buffering capability of a service user plane network element of the terminal device, that the service session management network element or the service user plane network element buffers downlink data of the terminal device. Embodiments of this application can alleviate the burden on an access network device of buffering the downlink data of the terminal device.

## Description

This application claims priority to Chinese Patent Application No. 202310398548.5, filed with the China National Intellectual Property Administration on April 7, 2023, and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

To reduce power consumption of terminal devices for monitoring paging (paging) messages, an extended discontinuous reception (extended discontinuous reception, eDRX) technology may be typically used. This technique prolongs a cycle of monitoring paging messages and increases sleep duration of the terminal devices, thereby achieving energy saving effects for the terminal devices.

To further enhance the energy saving effect, it is desirable to extend an eDRX cycle in an inactive state, ensuring that the terminal device sleeps in the inactive state for a longer time. However, long-time sleep of the terminal device increases the buffering burden for downlink data on an access network device. Therefore, when the terminal device enters the inactive state from a connected state and a prolonged eDRX cycle is configured, how to learn of a downlink data processing capability of a core network device is an urgent problem to be resolved by persons skilled in the art.

### SUMMARY

Embodiments of this application disclose a communication method and a related apparatus, to alleviate the burden on an access network device of buffering downlink data of a terminal device.

According to a first aspect, an embodiment of this application discloses a first communication method. The method is applied to an access and mobility management network element. A function performed by the access and mobility management network element in embodiments of this application may be performed by an apparatus (for example, a chip, a chip system, a circuit, or a means (means)) in the access and mobility management network element, or an apparatus that can be used together with the access and mobility management network element.

The following uses the access and mobility management network element as an example for description. The method includes: learning that a terminal device enters an inactive state and that a radio access type of the terminal device is a first radio access type; and determining, based on an extended buffering capability of a service session management network element and/or an extended buffering capability of a service user plane network element of the terminal device, that the service session management network element or the service user plane network element buffers downlink data of the terminal device. In this way, the service session management network element or the service user plane network element, instead of an access network device, buffers the downlink data of the terminal device, alleviating the burden on the access network device of buffering the downlink data of the terminal device.

In some feasible examples, the first radio access type includes a reduced capability (reduced capability, REDCAP) radio access type, for example, a reduced capability new radio (new radio, NR) access type, namely, an NR REDCAP access type.

In some feasible examples, the method further includes: receiving a first indication from the access network device, where the first indication indicates the terminal device to enter the inactive state. In this way, the access and mobility management network element may learn of a status of the terminal device, and further determine how to buffer the downlink data of the terminal device in the status.

In some feasible examples, the method further includes: receiving the extended buffering capability from the service session management network element. The extended buffering capability includes the extended buffering capability of the service session management network element and/or the extended buffering capability of the service user plane network element, or may include an extended buffering capability of a core network device corresponding to the terminal device.

Optionally, the extended buffering capability of the core network device is determined based on the extended buffering capability of the service session management network element and/or the extended buffering capability of the service user plane network element.

In some feasible examples, the method further includes: sending first information to the service session management network element. The first information is used to obtain the extended buffering capability, or the first information includes the radio access type of the terminal device. In other words, the access and mobility management network element may send the indication to the service session management network element, to indicate the service session management network element to report the extended buffering capability of the service session management network element and/or the extended buffering capability of the service user plane network element. Alternatively, the access and mobility management network element may send the radio access type of the terminal device to the service session management network element, so that the service session management network element obtains, based on the fact that the radio access type of the terminal device is the first radio access type, the extended buffering capability of the service session management network element and/or the extended buffering capability of the service user plane network element. Then, the service session management network element sends the extended buffering capability of the service session management network element and/or the extended buffering capability of the service user plane network element to the access and mobility management network element.

According to a second aspect, an embodiment of this application discloses a second communication method. The method is applied to an access and mobility management network element. In embodiments of this application, a function performed by the access and mobility management network element may be performed by an apparatus in the access and mobility management network element, or an apparatus that can be used together with the access and mobility management network element.

The following uses the access and mobility management network element as an example for description. The method includes: learning that a radio access type of a terminal device is a first radio access type; and sending second information to an access network device. The second information includes: an extended buffering capability of a service session management network element or an extended buffering capability of a service user plane network element of the terminal device, or an extended buffering capability of a core network device corresponding to the terminal device, so that the access network device determines, based on the extended buffering capability and/or a preference type of the terminal device, a long extended discontinuous reception (extended discontinuous reception, eDRX) parameter used by the terminal device in an inactive state.

In some feasible examples, the first radio access type includes a reduced capability radio access type.

In some feasible examples, the method further includes: determining the extended buffering capability of the core network device based on the extended buffering capability of the service session management network element and/or the extended buffering capability of the service user plane network element.

It may be understood that, after learning that the radio access type of the terminal device is the first radio access type, the access and mobility management network element may obtain the extended buffering capability of the service session management network element and/or the extended buffering capability of the service user plane network element of the terminal device. Then, the access and mobility management network element may determine, based on the extended buffering capability of the service session management network element and/or the extended buffering capability of the service user plane network element of the terminal device, the extended buffering capability of the core network device corresponding to the terminal device. The access and mobility management network element sends the second information to the access network device, to carry the extended buffering capability of the service session management network element and/or the extended buffering capability of the service user plane network element, or the extended buffering capability of the core network device. The access network device may further determine, based on at least one of the foregoing extended buffering capabilities and/or the preference type of the terminal device, whether the terminal device uses the long eDRX parameter in the inactive state. In this way, the access network device may determine, based on the extended buffering capability of the core network device, whether to use the long eDRX parameter to perform a related step when the terminal device enters the inactive state, so that energy saving effect of the terminal device can be improved.

In some feasible examples, the method further includes: receiving the extended buffering capability from the service session management network element.

Optionally, the method further includes: sending the extended buffering capability or a downlink communication processing capability of the core network device to the access network device. The downlink communication processing capability of the core network device means that the core network device can perform auxiliary communication for the long eDRX parameter in the inactive state. The downlink communication processing capability of the core network device may include the extended buffering capability of the core network device and a downlink signaling processing capability.

Optionally, the method further includes: determining the downlink communication processing capability of the core network device based on the extended buffering capability of the core network device and/or the downlink signaling processing capability. The downlink signaling processing capability of the core network device means that the core network device can perform downlink signaling processing on the long eDRX parameter in the inactive state, including reachability management of the terminal device and the like. The access and mobility management network element may determine the downlink signaling processing capability of the core network device.

For example, if the core network device supports downlink signaling processing and extended buffering, it is determined that the core network device supports downlink communication processing; or if the core network device does not support downlink signaling processing and extended buffering, it is determined that the core network device does not support downlink communication processing; or if the core network device supports downlink signaling processing but does not support extended buffering, it is determined that the core network device supports downlink communication processing.

In some feasible examples, the method further includes: sending first information to the service session management network element, where the first information is used to obtain the extended buffering capability, or the first information includes the radio access type of the terminal device.

In some feasible examples, the method further includes: sending the preference type of the terminal device to the access network device.

In some feasible examples, the method further includes: receiving the preference type of the terminal device from a unified data management network element or the access network device.

In some feasible examples, the preference type includes one or more of the following: energy saving, data packet integrity, packet loss tolerance, delay tolerance, a fixed terminal location, or a limited terminal mobility location.

According to a third aspect, an embodiment of this application discloses a third communication method. The method is applied to an access network device. In embodiments of this application, a function performed by the access network device may be performed by an apparatus (for example, a chip, a chip system, a circuit, or a means) in the access network device, or an apparatus that can be used together with the access network device.

The following uses the access network device as an example for description. The method includes: receiving second information from an access and mobility management network element, where the second information includes: an extended buffering capability of a service session management network element or an extended buffering capability of a service user plane network element of a terminal device, or an extended buffering capability of a core network device corresponding to the terminal device, and a radio access type of the terminal device is a first radio access type; and determining, based on the extended buffering capability and/or a preference type of the terminal device, that the terminal device uses a long eDRX parameter in an inactive state. In this way, after the access network device receives the second information from the access and mobility management network element, the access network device may determine, based on the extended buffering capability of the service session management network element or the service user plane network element or the extended buffering capability of the core network device carried in the second information, and/or the preference type of the terminal device, whether the terminal device uses the long eDRX parameter or does not use the long eDRX parameter in the inactive state, so that energy saving effect of the terminal device can be improved when the terminal device uses the long eDRX parameter when entering the inactive state.

In some feasible examples, a first preference type includes energy saving or packet loss tolerance. Alternatively, the first preference type may include a fixed terminal location or a limited terminal mobility location. It may be understood that the first preference type is a preference type pursued by the terminal device when the terminal device uses the long eDRX parameter in the inactive state, and the terminal device is preferred to implement better energy saving effect or has an excessively high delay tolerance feature.

In some feasible examples, the determining, based on the extended buffering capability and/or the preference type of the terminal device, that the terminal device uses the long eDRX parameter in the inactive state includes: If the extended buffering capability is supporting extended buffering or the preference type of the terminal device is the first preference type, determining that the terminal device uses the long eDRX parameter in the inactive state. In other words, when the extended buffering capability is supporting extended buffering, it may be determined that the terminal device uses the long eDRX parameter in the inactive state. Alternatively, when the preference type of the terminal device is the first preference type, regardless of whether the core network device supports extended buffering, it may be determined that the terminal device uses the long eDRX parameter in the inactive state.

In some feasible examples, the method further includes: if the preference type of the terminal device is not the first preference type, determining that the terminal device uses a short eDRX parameter in the inactive state. In other words, when the preference type of the terminal device does not include the first preference type, for example, the preference type is data integrity, it may be determined that the terminal device uses the short eDRX parameter or does not use the long eDRX parameter in the inactive state, to avoid causing buffer burden to the access network device.

In some feasible examples, the method further includes: receiving the preference type from the access and mobility management network element or the terminal device.

In some feasible examples, the first radio access type includes a reduced capability radio access type.

According to a fourth aspect, an embodiment of this application discloses a fourth communication method. The method is applied to a service session management network element of a terminal device. In embodiments of this application, a function performed by the service session management network element may be performed by an apparatus (for example, a chip, a chip system, a circuit, or a means) in the service session management network element, or an apparatus that can be used together with the service session management network element.

The following uses the service session management network element as an example for description. The method includes: receiving first information from an access and mobility management network element, where the first information includes a radio access type of the terminal device, or the first information is used to obtain an extended buffering capability of a service session management network element and/or an extended buffering capability of a service user plane network element of the terminal device; and sending the extended buffering capability to the access and mobility management network element based on the first information.

In some feasible examples, the sending the extended buffering capability to the access and mobility management network element based on the first information includes: determining, based on the first information, that the radio access type of the terminal device is a first radio access type.

In some feasible examples, the first radio access type includes a reduced capability radio access type.

In some feasible examples, the extended buffering capability includes the extended buffering capability of the service session management network element and/or the extended buffering capability of the service user plane network element of the terminal device.

In some feasible examples, the extended buffering capability includes an extended buffering capability of a core network device corresponding to the terminal device, and the extended buffering capability of the core network device is determined based on the extended buffering capability of the service session management network element and/or the extended buffering capability of the service user plane network element of the terminal device.

It should be understood that specific content of the fourth aspect is included in the content of the first aspect. For corresponding features of the fourth aspect and beneficial effect achieved by the fourth aspect, refer to the descriptions of the first aspect. To avoid repetition, detailed descriptions are appropriately omitted herein.

According to a fifth aspect, an embodiment of this application discloses a fifth communication method. The method is applied to a service session management network element of a terminal device. In embodiments of this application, a function performed by the service session management network element may be performed by an apparatus in the service session management network element, or an apparatus that can be used together with the service session management network element.

The following uses the service session management network element as an example for description. The method includes: receiving a second indication from an access and mobility management network element, where the second indication indicates to select, for the terminal device, a user plane network element that supports extended buffering; and selecting, for the terminal device based on the second indication, the user plane network element that supports extended buffering. In this way, the service session management network element may select the user plane network element that supports extended buffering to buffer downlink data for the terminal device, so that load of buffering the downlink data of the terminal device by the access network device can be relieved.

According to a sixth aspect, an embodiment of this application discloses a sixth communication method. The method is applied to an access and mobility management network element. In embodiments of this application, a function performed by the access and mobility management network element may be performed by an apparatus in the access and mobility management network element, or an apparatus that can be used together with the access and mobility management network element.

The following uses the access and mobility management network element as an example for description. The method includes: determining that a radio access type of a terminal device is a first radio access type; and selecting, for the terminal device, a session management network element that supports extended buffering; or sending a second indication to a service session management network element of the terminal device, where the second indication is used to select, for the terminal device, the user plane network element that supports extended buffering.

It may be understood that, after determining that the radio access type of the terminal device is the first radio access type, the access and mobility management network element may select, for the terminal device, the session management network element that supports extended buffering; or send the second indication to the service session management network element of the terminal device, to request or indicate the session management network element to select, for the terminal device, the user plane network element that supports extended buffering. Even when the session management network element fails to select, for the terminal device, the session management network element that supports extended buffering, the second indication may be sent to the service session management network element of the terminal device, to request the service session management network element to select, for the terminal device, the user plane network element that supports extended buffering. In this way, the session management network element or the user plane network element that supports extended buffering may buffer downlink data for the terminal device, so that load of buffering the downlink data of the terminal device by an access network device can be relieved.

In some feasible examples, the first radio access type includes a reduced capability radio access type.

According to a seventh aspect, an embodiment of this application discloses a communication apparatus. The apparatus is used in an access and mobility management network element. In embodiments of this application, a function performed by the access and mobility management network element may be performed by an apparatus in the access and mobility management network element, or an apparatus that can be used together with the access and mobility management network element. The apparatus has a corresponding function of implementing the method in any one of the first aspect or the sixth aspect or any feasible example thereof. The function may be implemented by hardware, or may be implemented by hardware executing corresponding software. The hardware or the software includes one or more modules corresponding to the function.

According to an eighth aspect, an embodiment of this application discloses a communication apparatus. The apparatus is used in an access network device. In embodiments of this application, a function performed by the access network device may be performed by an apparatus in the access network device, or an apparatus that can be used together with the access network device. The apparatus has a corresponding function of implementing the method according to any one of the third aspect or any feasible example in the third aspect. The function may be implemented by hardware, or may be implemented by hardware executing corresponding software. The hardware or the software includes one or more modules corresponding to the function.

According to a ninth aspect, an embodiment of this application discloses a communication apparatus. The apparatus is used in a service session management network element of a terminal device. In embodiments of this application, a function performed by the service session management network element may be performed by an apparatus in the service session management network element, or an apparatus that can be used together with the service session management network element. The apparatus has a corresponding function of implementing the method in any one of the fourth aspect or the fifth aspect or any feasible example thereof. The function may be implemented by hardware, or may be implemented by hardware executing corresponding software. The hardware or the software includes one or more modules corresponding to the function.

According to a tenth aspect, an embodiment of this application provides a communication apparatus. The communication apparatus may be an access network device or a core network device. The core network device may be an access and mobility management network element or a service session management network element of a terminal device. The communication apparatus includes units, modules, or means configured to perform the steps of the implementation method according to any one of the first aspect to the sixth aspect.

In some feasible examples, the communication apparatus may alternatively be the terminal device.

In some feasible examples, the core network device may alternatively be a service user plane network element of the terminal device.

According to an eleventh aspect, an embodiment of this application provides a communication apparatus. The communication apparatus may be an access network device or a core network device. The core network device may be an access and mobility management network element or a service session management network element of a terminal device. The communication apparatus may include a processor. The processor is configured to execute instructions in a memory or use a logic circuit, to enable the communication apparatus to perform the method in any one of the foregoing aspects or feasible examples.

In some feasible examples, the communication apparatus further includes one or more of the memory or a transceiver. The transceiver is configured to send and receive data and/or signaling.

In some feasible examples, the communication apparatus may alternatively be the terminal device.

In some feasible examples, the core network device may alternatively be a service user plane network element of the terminal device.

According to a twelfth aspect, an embodiment of this application provides a communication system. The communication system includes an access network device and a core network device. When running in the communication system, the access network device and the core network device are configured to perform the method in any one of the first aspect to the sixth aspect or the feasible examples. The core network device may be an access and mobility management network element or a service session management network element of a terminal device.

In some feasible examples, the communication system may further include the terminal device.

In some feasible examples, the core network device may further include a service user plane network element of the terminal device.

According to a thirteenth aspect, an embodiment of this application provides a computer-readable storage medium. The computer-readable storage medium stores instructions. When the instructions are run by a processor, the method in any one of the foregoing aspects or feasible examples is performed.

According to a fourteenth aspect, an embodiment of this application provides a computer program product. The computer program product includes instructions. When the instructions are run by a processor, the method in any one of the first aspect to the sixth aspect or the feasible examples is performed.

According to a fifteenth aspect, this application provides a chip, including a processor, configured to invoke instructions from a memory and run the instructions stored in the memory, so that a communication apparatus in which the chip is installed performs the method according to any one of the first aspect to the sixth aspect or the feasible examples.

According to a sixteenth aspect, this application provides another chip, including an input interface, an output interface, and a processing circuit. The input interface, the output interface, and the circuit are connected through an internal connection path. The processing circuit is configured to perform the method according to any one of the foregoing aspects or feasible examples. Optionally, the chip further includes a memory. The input interface, the output interface, a processor, and the memory are connected through the internal connection path. The processor is configured to execute code in the memory. When the code is executed, the processor is configured to perform the method in any one of the first aspect to the sixth aspect or feasible examples.

According to a seventeenth aspect, this application provides a chip system, including at least one processor and a communication interface. The communication interface and the at least one processor are interconnected through a line, and the at least one processor is configured to run a computer program or instructions, to perform the method according to any one of the first aspect to the sixth aspect or the feasible examples.

It should be understood that mutual reference may be made to the implementations and beneficial effect of the foregoing aspects.

### BRIEF DESCRIPTION OF DRAWINGS

The following describes accompanying drawings used in embodiments of this application.
FIG. 1 is a diagram of an architecture of a communication system;
FIG. 2 is a diagram of an architecture of another communication system;
FIG. 3 is a schematic flowchart of a communication method according to an embodiment of this application;
FIG. 4A and FIG. 4B are a diagram of a scenario of a communication method according to this application;
FIG. 5 is a schematic flowchart of another communication method according to an embodiment of this application;
FIG. 6 is a diagram of a scenario of another communication method according to this application;
FIG. 7 is a schematic flowchart of still another communication method according to an embodiment of this application;
FIG. 8 is a schematic flowchart of still another communication method according to this application;
FIG. 9 is a diagram of a structure of a communication apparatus according to an embodiment of this application; and
FIG. 10 is a diagram of a structure of another communication apparatus according to an embodiment of this application.

### DESCRIPTION OF EMBODIMENTS

The technical solutions in embodiments of this application may be applied to various communication systems, for example, a long term evolution (long term evolution, LTE) system, an NR system, a public land mobile network (public land mobile network, PLMN) system, a long term evolution-advanced (LTE advanced, LTE-A) system, a device-to-device (device-to-device, D2D) communication system, a vehicle-to-everything (vehicle to everything, V2X) communication system, a machine-to-machine (machine to machine, M2M) communication system, an internet of things (internet of things, IoT) communication system, a narrow band internet of things (narrow band internet of thing, NB-IoT) communication system, an integrated sensing and communication system, a frequency division duplex (frequency division duplex, FDD) system, a time division duplex (time division duplex, TDD) system, a non-terrestrial communication (non-terrestrial communication, NTN) system, a wireless projection communication system, an integrated access and backhaul (integrated access and backhaul, IAB) communication system, a public land mobile network (public land mobile network, PLMN), a non-public network (Non-Public network, NPN), a communication system (for example, a 6G communication system) evolved after the 5G communication system, or a non-3rd generation partnership project (3rd generation partnership project, 3GPP) communication system. This is not limited.

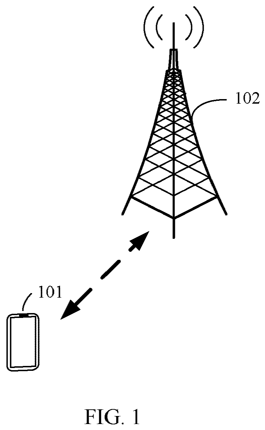

FIG. 1 is a diagram of an architecture of a communication system. As shown in FIG. 1, the communication system may include a terminal device 101 and a network device 102. The terminal device 101 may be connected to the network device 102 in a wireless manner. The terminal device 101 may be at a fixed location, or may be movable. The terminal device 101 and the network device 102 may be deployed on land, for example, deployed as indoor or outdoor devices, handheld or vehicle-mounted devices, or the like. Alternatively, the terminal device 101 and the network device 102 may be deployed on a water surface, or in an airplane, a balloon, a satellite, or the like in the air. This is not limited herein.

Communication between the terminal device 101 and the network device 102, between the network devices 102, and between the terminal devices 101 may be performed by using a licensed spectrum (licensed spectrum), or may be performed by using an unlicensed spectrum (unlicensed spectrum), or may be performed by using both the licensed spectrum and the unlicensed spectrum. Spectrum resources used by the terminal device 101 and the network device 102 are not limited in this application.

The terminal device 101 is a user-side entity configured to receive or transmit a signal. The terminal device 101 may also be referred to as a terminal (terminal), user equipment (user equipment, UE), an access terminal, a UE unit, a UE station, a mobile device, a mobile station, a mobile station (mobile station), a mobile terminal, a mobile client, a mobile unit (mobile unit), a remote station, a remote terminal device, a remote unit, a wireless unit, a wireless communication device, a user agent, a user apparatus, or the like. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to a wireless modem, a vehicle-mounted device, a wearable device, a terminal device in future 5G, a terminal device in a future evolved PLMN, a terminal device in a future NPN, or the like. In embodiments of this application, a chip used in the foregoing device may also be referred to as a terminal device.

The network device 102 may be an entity for signal transmission or reception. It is mainly configured for radio physical control, resource scheduling and radio resource management, radio access control, mobility management, and the like, and provide reliable wireless transmission protocols and data encryption protocols, and the like. The network device may include an access network (access network, AN) device that supports wired access, and may further include a radio access network (radio access network, RAN) device that supports radio access, which may be referred to as an access network for short.

Optionally, the access network device includes a plurality of AN/RAN nodes. The AN/RAN node may include but is not limited to: an access point (access point, AP), an enhanced NodeB (enhanced NodeB, eNB), a home base station (for example, a home evolved NodeB, or a home NodeB, HNB), a baseband unit (baseband unit, BBU), a next-generation NodeB (NR NodeB, gNB), a transmission reception point (transmission reception point, TRP), a transmission point (transmission point, TP), or another access node, for example, a wireless relay node or a wireless backhaul node. Alternatively, the AN/RAN node may be one or more formed antenna panels, or may be a network node that forms a gNB or a transmission point, for example, a BBU or a distributed unit (distributed unit, DU), or may be a device that undertakes a base station function in a communication system like D2D, V2X, M2M or U2U. Alternatively, the AN/RAN node may be a radio controller in a cloud radio access network (cloud radio access network, CRAN) scenario, or may be an open access network (open RAN, O-RAN, or ORAN), or may be an access network device in a communication system evolved from the 5G communication system, for example, an xNodeB or the like in the 6G communication system, or may be an access network device in a PLMN network evolved from the 5G communication system, or the like. This is not limited herein.

Main functions of the access network device include at least one of radio resource management, internet protocol (internet protocol, IP) header compression, user data flow encryption, mobility management entity (mobility management entity, MME) selection during attachment of user equipment, routing of user plane data to a serving gateway (serving gateway, SGW), paging message organization and sending, broadcast message organization and sending, measurement for mobility or scheduling, measurement report configuration, and the like.

Optionally, the network device may include a central unit (central unit, CU), a distributed unit (distributed unit, DU), and the like. The CU may be further classified into a CU-control plane (control plane, CP), a CU-user plane (user plane, UP), and the like. Alternatively, the network device may be a radio unit (radio unit, RU) or the like. Alternatively, the network device may be in an ORAN architecture or the like. A specific deployment manner of the network device is not limited in embodiments of this application. For example, when the network device is of the ORAN architecture, the network device may be an access network device in the ORAN, a module in the access network device, or the like. In an ORAN system, a CU may also be referred to as an open (open, O)-CU, a DU may also be referred to as an O-DU, a CU-CP may also be referred to as an O-CU-CP, a CU-UP may also be referred to as an O-CU-UP, and an RU may also be referred to as an O-RU.

Optionally, the network device may further include a core network (core network, CN) device, also known as a core network for short. The core network device is responsible for maintaining subscription data of a mobile network, managing network elements of the mobile network, and providing functions such as session management, mobility management, policy management, security authentication for a terminal device, and the like.

In different communication systems, the core network device may correspond to different devices. For example, in a 3G communication system, the core network device may correspond to a serving GPRS support node (serving GPRS support node, SGSN) and/or a gateway GPRS support node (gateway GPRS support node, GGSN); in a 4G communication system, the core network device may correspond to an MME and/or a serving gateway (serving gateway, S-GW); and in the 5G communication system, the core network device may correspond to an access and mobility management function (access and mobility management function, AMF) network element, a session management function (session management function, SMF) network element, or a user plane function (user plane function, UPF) network element.

Optionally, the network device may further include a data network (data network, DN) device, also known as a data network for short. The data network device is configured to provide services for users. Generally, a client is a terminal device, and a server is a data network device. A data network provided by the data network device may be a private network, for example, a local area network. The data network device may alternatively include an external network that is not managed by operators, for example, the Internet. The data network device may alternatively include a dedicated network jointly deployed by operators, for example, a network that provides an IP multimedia subsystem (IP multimedia subsystem, IMS) service.

To make objectives, technical solutions, and advantages of this application clearer, the following uses the 5G communication system as an example for description. The 5G communication system may also be referred to as a next-generation mobile communication system, and may be referred to as a 5G system for short, and may be referred to as NextGen or 5GS for short in English. In addition, the core network may be referred to as a NextGen Core or a 5GC. The data network may be referred to as a NextGen Data network. The access network may be referred to as a NextGen (R)AN, or referred to as an NG-RAN for short. In addition, the terminal device establishes a signal connection and a data connection to the access network by using a new air interface technology, to transmit a control signal and service data to the data network.

To provide specific network functions and specific network features, a network slicing (network slice) technology can be adopted to partition a physical network into multiple virtual end-to-end virtual networks. Each of these virtual networks is logically independent, including devices, access technologies, transmission paths, core networks, and the like within the virtual network. In this way, each network slice is instantiated by an independent network function or a combination of functions. The isolation between network slices enables different users or user groups to flexibly and dynamically customize network capabilities based on different application scenarios and requirements.

In the 5G communication system, the network slicing technology may be used to implement network function separation, to be specific, separation between a control plane (control plane, CP) function and a user plane (user plane, UP) function, to meet wide and changing service requirements. A single network slice includes a control plane function network element and a UPF network element. The control plane function network element mainly completes access authentication, security encryption, location registration of the terminal device, and the like, and completes functions such as establishment, release, and modification of a user plane transmission path, and the like. The UPF network element mainly completes functions such as routing and forwarding of user plane data, and the like.

The control plane of the core network uses a service-oriented architecture. Control plane function network elements interact with each other in a service invoking manner to replace a point-to-point communication mode in a conventional architecture. In the service-oriented architecture, the control plane function network element exposes a service interface to another control plane function network element, so that the another control plane function network element can invoke the service interface. In point-to-point communication, there is a set of specific interaction messages on a communication interface between control plane function network elements, and the messages can be used only by control plane function network elements at two ends of the interface during communication.

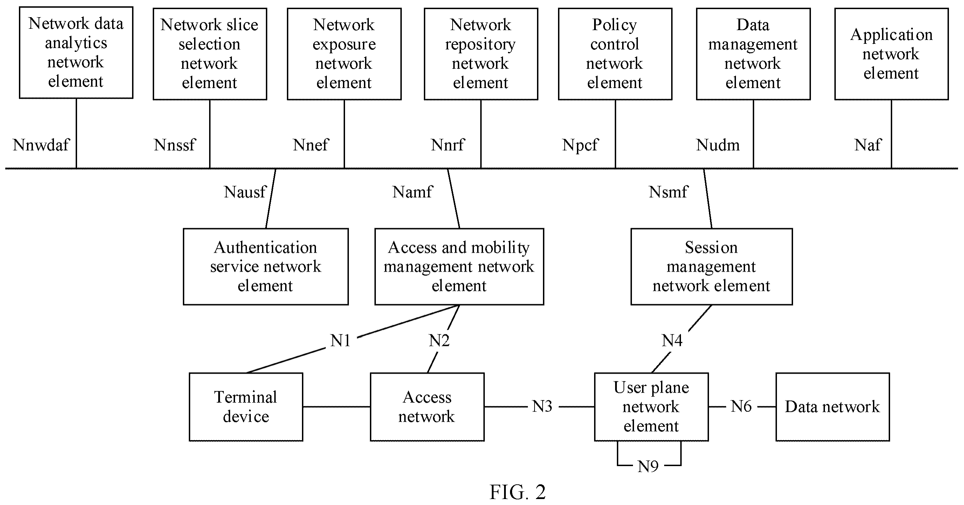

FIG. 2 is a diagram of an architecture of another communication system. As shown in FIG. 2, the communication system may include a terminal device, a data network device, an access network device, and function entities of a core network device. The function entities of the core network device may include a user plane network element, configured for packet routing and forwarding, quality of service (quality of service, QoS) handling for user plane data, and the like. The user plane network element may forward user data packets according to a routing rule of a session management network element, for example, send uplink data to the data network device or another user plane network element, and forward downlink data to another user plane network element or an (R)AN network element. The user plane network element may be a UPF network element in the 5G communication system. In FIG. 2, an N2 reference point may be located between a control plane of the access network device and a control plane of the core network device, an N3 reference point may be located between a user plane of the access network device and a user plane of the core network device, and an N6 reference point may be located between the user plane of the core network device and a user plane of the data network device.

The function entities of the core network device may further include a control plane function network element, for example, an authentication service network element, an access and mobility management network element, a session management network element, a network slice selection network element, a network exposure network element, a network repository network element, a policy control network element, a data management network element, an application network element, and a network data analytics network element. The following describes functions of the functional entities.

The authentication service network element is configured to perform an authentication service and generate keys to implement bidirectional authentication on a terminal device, support a unified authentication framework, and security authenticate a terminal device. The authentication server may be an authentication service function (authentication server function, AUSF) network element in the 5G communication system.

The access and mobility management network element is configured to implement access management and mobility management of a terminal device. For example, the access and mobility management network element is responsible for status maintenance of the terminal device, reachability management of the terminal device, handling and forwarding of a non-access-stratum (non-access-stratum, NAS) message of non-mobility management (mobility management, MM), and forwarding of session management (session management, SM) N2 messages. The access and mobility management network element may be an AMF network element in the 5G communication system.

The session management network element is configured for session management of a terminal device, and allocation and release of resources for sessions of the terminal device. The resource includes resource parameters QoS, session paths, forwarding rules, and the like. The session management network element may be an SMF network element in the 5G communication system.

The network slice selection network element is configured for selection of a network slice for a terminal device. The network slice selection network element may be a network slice selection function (network slice selection function, NSSF) network element in the 5G communication system.

The network exposure network element exposes network functions to a third party through a northbound API interface. The network exposure network element may be a network exposure function (network exposure function, NEF) network element in the 5G communication system.

The network repository network element is configured to provide a storage function and a selection function of network function entity information for other network elements. The network repository network element may be referred to as a network repository function (network repository function, NRF) network element in the 5G communication system.

The data management network element is configured to implement user subscription context management, for example, store subscription information of a terminal device. The data management network element may be referred to as a unified data management (unified data management, UDM) network element in the 5G communication system.

The policy control network element is configured to implement user policy management. Similar to a policy and charging rules function (policy and charging rules function, PCRF) network element in LTE, the policy control network element is mainly responsible for policy authorization, generation of quality of service and charging rules, and delivery of a corresponding rule to the UPF network element via the SMF network element, to complete installation of a corresponding policy and rule. The policy control network element may be a policy control function (policy control function, PCF) network element in the 5G communication system.

The application network element may be a third-party application control platform, or may be a device of an operator. The application network element is configured to interact with a core network to provide services, and may affect service flow routing, access network capability exposure, policy control, and the like. The application network element may be an application function (application function, AF) network element in the 5G communication system.

The network data analytics network element is configured to provide network data collection and analytics functions based on technologies such as big data and artificial intelligence. The network data analytics network element may be a network data analytics function (network data analytics function, NWDAF) network element in the 5G communication system.

In embodiments of this application, the foregoing network elements may be referred to as corresponding names for short, for example, an AMF, an SMF, and a UDM. In addition, the terminal device may also be referred to as a terminal for short.

It should be noted that, that the AMF, the SMF, the UDM, and the like are referred to as network elements in embodiments of this application is merely an example. In practice, the network elements may be network elements implemented on dedicated hardware, may be software instances running on dedicated hardware, or may be instances of virtualization functions on an appropriate platform. For example, the foregoing virtualization platform may be a cloud platform. In a future communication system, the foregoing network elements may have other names. This is not limited in this application.

In the 5G communication system, data transmission between the AMF network element and the terminal device may be performed through an N1 interface, and data transmission between the AMF network element and the (R)AN network element may be performed through an N2 interface. Data may be transmitted between the (R)AN network element and the UPF network element through an N3 interface, and data may be transmitted between the UPF network element and the SMF network element through an N4 interface. Data may be transmitted between the UPF network element and the data network device through an N6 interface, and data may be transmitted between UPF network elements through an N9 interface. The function entity of the core network device may transmit data by using an HTTP/TCP protocol through a service-based interface

(service-based interface, SBI) of the function entity. For example, Nnssf is an interface based on an NSSF service, Nausf is an interface based on an AUSF service, and Namf is an interface based on an AMF service. The foregoing N1, N2, N3, N4, and N6 may also be referred to as NG1, NG2, NG3, NG4, and NG6.

It should be noted that a distribution form of network elements in the core network device is not limited in embodiments of this application. The distribution form shown in FIG. 2 is merely an example, and is not limited in this application. The network architecture and the service scenario described in embodiments of this application are intended to describe the technical solutions in embodiments of this application more clearly, and do not constitute any limitation on the technical solutions provided in embodiments of this application. A person of ordinary skill in the art may know that, with the evolution of the network architecture and the emergence of new service scenarios, the technical solutions provided in embodiments of this application are also applicable to similar technical problems.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (which may also be referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk or a magnetic tape), an optical disc (for example, a compact disc (compact disc, CD), or a digital versatile disc (digital versatile disc, DVD)), a smart card and a flash memory component (for example, erasable programmable read-only memory (erasable programmable read-only memory, EPROM), a card, a stick, or a key drive). Various storage media described in this specification may represent one or more devices and/or other machine-readable media configured to store information. The term "machine-readable media" may include but is not limited to a radio channel, and various other media that can store, contain and/or carry instructions and/or data.

It should be noted that quantities and types of network devices and terminal devices included in the network architecture shown in FIG. 1 or FIG. 2 are merely examples. Embodiments of this application are not limited thereto. For example, more or fewer terminal devices that communicate with the network device may alternatively be included. For another example, more or fewer network devices that communicate with the terminal device may be included. For conciseness of description, these devices are not described one by one in the accompanying drawings. In addition, in the network architecture shown in FIG. 1 or FIG. 2, although the network device and the terminal device are shown, the application scenario may not be limited to including the network device and the terminal device. For example, the application scenario may further include a device configured to bear a virtualized network function. This is clear to a person skilled in the art, and details are not described herein.

The communication method provided in embodiments of this application may be applied to various communication scenarios, for example, one or more of enhanced mobile broadband (enhanced mobile broadband, eMBB), ultra-reliable low-latency communication (ultra-reliable low-latency communication, URLLC), machine-type communication (machine-type communication, MTC), massive machine type communication (massive machine type communication, mMTC), enhanced machine type communication (enhanced machine type communication, eMTC), IoT, NB-IoT, customer premise equipment (customer premise equipment, CPE), augmented reality (augmented reality, AR), virtual reality (virtual reality, VR), D2D, V2X, industrial control (industrial control), self driving (self driving), telemedical (telemedical), a smart grid (smart grid), smart furniture, smart office, smart wearable, smart transportation, and a smart city (smart city).

To support a low power consumption requirement, 3GPP researches an energy saving technology, and a transceiver antenna of the terminal device is disabled when there is no communication service requirement, to enable the terminal device to enter a sleep state by using an energy saving mode, a discontinuous reception (discontinuous reception, DRX) technology, an extended eDRX technology, an idle (idle) eDRX technology, and the like. In this way, power consumption of the terminal device is greatly reduced, and a battery life of the device is prolonged.

Configuration of eDRX in idle mode extends an eDRX cycle to more than 2 hours. In addition, at least one paging time window (paging time window, PTW) is set in an eDRX cycle other than 5.12s and 10.24s. The terminal device monitors a paging channel in the PTW, to receive downlink data. In other time, the terminal device is in the sleep state and does not receive the downlink data. In the eDRX configuration in an inactive state, only a case in which the eDRX cycle is not greater than 10.24s is discussed. The terminal device wakes up at an interval of the eDRX cycle in the inactive state, to monitor a paging message.

In a 3GPP research process, a lightweight NR technology is introduced as an internet of things-oriented 5G NR technology, for example, an NR REDCAP technology. NR REDCAP can be used to reduce or tailor 5G capabilities to meet a rate requirement in a large-scale internet of things scenario with lower cost-effectiveness. These lightweight technologies can be used in high-end internet of things application scenarios, such as video surveillance (for example, a surveillance camera), industrial sensor networks (such as a temperature sensor and a pressure sensor), and wearable devices (such as a smart band, a smart watch, and smart glasses), to make up for legacy scenarios of LTE-M and NB-IoT, and expand 5G application scenarios.

Currently, in the NR REDCAP technology, an eDRX parameter in an RRC inactive (inactive) state is configured by a RAN. The RAN side receives an idle-mode eDRX parameter negotiated with the AMF in a registration process of the terminal device, and then sets the inactive-mode eDRX parameter with reference to the idle-mode eDRX parameter. The status of the terminal device is transparent and unknown to the CN side, and the CN side considers that the terminal device is in a connected state (for example, CM-CONNECTED). When the downlink data of the terminal device arrives at the CN side (for example, the UPF), the UPF directly sends the data to the RAN side. The RAN performs RAN paging on the terminal device, and sends the downlink data to the terminal device after the paging succeeds.

To further enhance energy saving effect, it is expected that the eDRX cycle in the inactive state is prolonged to ensure that the terminal device can sleep in the inactive state for a longer time. However, long-time sleep of the terminal device causes load of buffering the downlink data by the access network device.

In view of this, this application provides a communication method. When the terminal device enters the inactive state and a radio access type of the terminal device is a first radio access type, it is determined, based on an extended buffering capability of a service session management network element and/or a service user plane network element of the terminal device, whether the downlink data of the terminal device is buffered by the access network device, or by the service session management network element or the service user plane network element, so that load of buffering the downlink data of the terminal device by the access network device can be relieved when the downlink data of the terminal device is buffered by the service session management network element or the service user plane network element.

For ease of understanding embodiments of this application, the following first provides definitions of technical terms that may appear in embodiments of this application. Terms used in implementations of this application are merely used to explain specific embodiments of this application, and are not intended to limit this application.
(1) The service session management network element of the terminal device, which may be referred to as a service session management network element for short below, is a session management network element that establishes a session with the terminal device, to ensure that data transmission can be performed between the terminal device and a server. Correspondingly, the service user plane network element of the terminal device, which may be referred to as a service user plane network element for short below, is a user plane network element that can establish an N4 session with the service session management network element. A core network device corresponding to the terminal device is a core network device configured to implement wireless communication of the terminal device. It should be understood that the network device or the network element in this application may be configured to implement a related function of the terminal device.

The N4 session is used to establish an association between the service session management network element and the service user plane network element, and may relate to a reporting rule (reporting rule), an IP address, core network tunnel information (CN tunnel Info), data packet detection (data packet detection), a QoS enforcement (QoS enforcement) rule, and the like.

(2) The first radio access type may be understood as a radio access type in which the terminal device enters an inactive state and supports a long eDRX cycle. The first radio access type is not limited in this application. In some feasible examples, the first radio access type includes a REDCAP access type, or is another radio access type that supports the long eDRX cycle in the inactive state.

(3) The extended buffering capability may be understood as a data buffering capability of the core network device or a session management network element or a user plane network element in the core network device or a data buffering capability corresponding to specific duration in an application scenario in which the terminal device enters the inactive state and uses the long eDRX parameter.

The long eDRX parameter in the inactive state may include the long eDRX cycle in the inactive state, a PTW, and the like. This is not limited herein. The duration corresponding to the long eDRX cycle in the inactive state may be greater than or equal to 10.24s. A short eDRX parameter related to the long eDRX parameter may include a short eDRX cycle, a PTW, and the like. Duration corresponding to the short eDRX cycle in the inactive state may be less than 10.24s.

Different radio access types may correspond to different eDRX parameters. The REDCAP access type is used as an example. The long eDRX parameter in the inactive state includes the long eDRX cycle and the PTW, and duration corresponding to the long eDRX cycle may be greater than or equal to 10.24s. The short eDRX parameter in the inactive state includes only the short eDRX cycle, and duration corresponding to the short eDRX cycle may be less than 10.24s.

Optionally, an extended buffering capability of the core network device corresponding to the terminal device may be determined based on an extended buffering capability of one or more service session management network elements and/or an extended buffering capability of one or more service user plane network elements of the terminal device.

For example, if at least one service session management network element of the terminal device supports extended buffering, it is determined that the core network device corresponding to the terminal device supports extended buffering; or if at least one service user plane network element of the terminal device supports extended buffering, it is determined that the core network device corresponding to the terminal device supports extended buffering; or if none of the service session management network elements of the terminal device supports extended buffering, and none of the service user plane network elements of the terminal device supports extended buffering, it is determined that the core network device corresponding to the terminal device does not support extended buffering, or the like.

It may be understood that, when the eDRX cycle is prolonged, downlink data of the terminal device that is buffered by the access network device may increase compared with downlink data when the eDRX cycle is not prolonged. If the core network device corresponding to the terminal device supports buffering the downlink data for the terminal device, it may be determined that the session management network element or the user plane network element in the core network device buffers the downlink data of the terminal device. This can prevent the access network device from buffering the downlink data of the terminal device, and relieve load of buffering the downlink data of the terminal device by the access network device.

For example, if at least one service session management network element of the terminal device supports extended buffering, when the terminal device enters the inactive state and the radio access type of the terminal device is the first radio access type, it may be determined that the service session management network element buffers the downlink data for the terminal device. Alternatively, if at least one service user plane network element of the terminal device supports extended buffering, when the terminal device enters the inactive state and the radio access type of the terminal device is the first radio access type, it may be determined that the service user plane network element buffers the downlink data for the terminal device. In this way, load of buffering the downlink data of the terminal device by the access network device can be relieved.

For another example, if none of the service session management network elements of the terminal device supports extended buffering, and none of the service user plane network elements of the terminal device supports extended buffering, when the terminal device enters the inactive state, and the radio access type of the terminal device is the first radio type, it may be determined that the downlink data of the terminal device is not buffered by using the service session management network element or the service user plane network element, or it may be determined that the access network device buffers the downlink data for the terminal device, to avoid data loss.

(4) Downlink communication processing capability and downlink signaling processing capability of the core network device. The downlink communication processing capability of the core network device means that the core network device can perform auxiliary communication for the long eDRX parameter in the inactive state. The downlink signaling processing capability of the core network means that the core network device can perform downlink signaling processing on the long eDRX parameter in the inactive state, including reachability management of the terminal device and the like. The access and mobility management network element may determine the downlink signaling processing capability of the core network device.

Optionally, the downlink communication processing capability of the core network device may carry indication information of the downlink signaling processing capability and the extended buffering capability of the core network device. The extended buffering capability is used as an example. If the indication information is 0, it indicates that the extended buffering capability of the core network device is supported; or if the indication information is 1, it indicates that the extended buffering capability of the core network device is not supported.

Optionally, the downlink communication processing capability of the core network device is determined based on the downlink signaling processing capability and the extended buffering capability of the core network device.

For example, if the core network device supports downlink signaling processing and extended buffering, it is determined that the core network device supports downlink communication processing; or if the core network device does not support downlink signaling processing and/or does not support extended buffering, it is determined that the core network device does not support downlink communication processing; or if the core network device supports downlink signaling processing but does not support extended buffering, it is determined that the core network device supports downlink communication processing and the like.

(5) A preference type of the terminal device may be understood as a data processing type preferred by the terminal device. For example, if the terminal device prefers to process a data packet with integrity, the preference type may be data packet integrity; if the terminal device prefers to process data on a premise of energy saving, the preference type may be energy saving; if a packet loss probability of a data packet preferred by the terminal device should be less than a first threshold, the preference type may be packet loss tolerance; if a transmission delay of a data packet preferred by the terminal device should be less than a second threshold, the preference type may be delay tolerance; or if a location at which the terminal device prefers to process a data packet is a preset location or a preset range, the preference type may be a fixed terminal location or a limited terminal mobility location, or the like. This is not limited herein.

A method for obtaining the preference type of the terminal device by the network device is not limited in this application. Optionally, the preference type of the terminal device may belong to subscription data of the terminal device. In this way, the network device (for example, the access network device) may receive the preference type of the terminal device from the terminal device. The preference type of the terminal device may be stored in a unified data management network element. In this way, the network device (for example, the access and mobility management network element) may obtain the subscription data of the terminal device from the unified data management network element, to obtain the preference type of the terminal device.

The preference type may include the first preference type, and the first preference type is a specified type in the preference type. The first preference type is not limited in this application. Optionally, the first preference type includes at least one of the following: energy saving, packet loss tolerance, a fixed terminal location, or a limited terminal mobility location. It may be understood that the first preference type is a preference type pursued by the terminal device when the terminal device uses the long eDRX parameter in the inactive state, and the terminal device is preferred to implement better energy saving effect or has an excessively high delay tolerance feature.

The following describes in detail a communication method provided in embodiments of this application. A communication apparatus in the communication method may include a terminal device, an access network device, and a core network device (which may be referred to as a core network for short below) corresponding to the terminal device. The core network device may include an access and mobility management network element, a service session management network element and a service user plane network element of the terminal device, and the like. For a system framework corresponding to these communication apparatuses, refer to the descriptions in FIG. 1 or FIG. 2. It should be understood that there may be one or more service session management network elements and one or more service user plane network elements. Each service session management network element and each service user plane network element may separately perform the communication method provided in this application. In this specification, one service session management network element and one service user plane network element are used as an example for description. A function performed by the communication apparatus in this application may be performed by an apparatus (for example, a chip, a chip system, a circuit, or a means) in the communication apparatus, or may be an apparatus that can be used together with the communication apparatus.

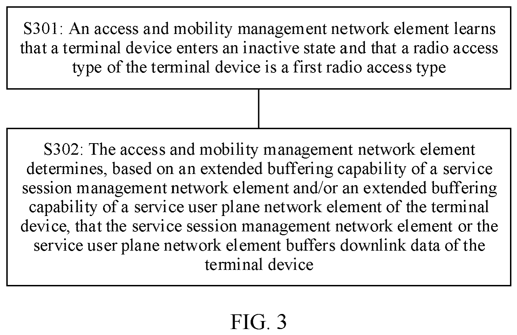

FIG. 3 is a schematic flowchart of a communication method according to an embodiment of this application. The communication method includes the following steps.

S301: An access and mobility management network element learns that a terminal device enters an inactive state and that a radio access type of the terminal device is a first radio access type.

For the first radio access type, refer to the foregoing descriptions. Details are not described herein again.

In an example, before step S301, the method may further include the following step: An access network device sends a first indication to the access and mobility management network element.

Correspondingly, the access and mobility management network element receives the first indication from the access network device.

The first indication indicates the terminal device to enter the inactive state. The first indication may be indication information indicating that the terminal device enters the inactive state.

The first indication may be carried in a session establishment request message or another type of message, and the message may further carry the radio access type of the terminal device. It may be understood that the access and mobility management network element may learn, based on the first indication, that the terminal device enters the inactive state, and further determine how to buffer downlink data of the terminal device in this state.

Optionally, when the access network device sends the first indication information, the first indication may further carry an eDRX parameter configured by the access network device for the terminal device. In this way, the access and mobility management network element learns whether a long eDRX parameter is configured when the terminal device is in the inactive state, to ensure that downlink signaling processing and correct buffering of the downlink data are performed on the terminal device.

S302: The access and mobility management network element determines, based on an extended buffering capability of a service session management network element and/or an extended buffering capability of a service user plane network element of the terminal device, that the service session management network element or the service user plane network element buffers the downlink data of the terminal device.

For content of the extended buffering capability, refer to the foregoing descriptions. Details are not described herein again. A method for determining whether the service session management network element or the service user plane network element buffers the downlink data of the terminal device is not limited in this application. Optionally, step S302 includes: The access and mobility management network element determines, based on an extended buffering capability of one or more service session management network elements and/or an extended buffering capability of one or more service user plane network elements of the terminal device, whether the service session management network element or the service user plane network element buffers the downlink data of the terminal device.

For example, if at least one service session management network element of the terminal device supports extended buffering, it is determined that the service session management network element buffers the downlink data for the terminal device; or if at least one service user plane network element of the terminal device supports extended buffering, it is determined that the service user plane network element buffers the downlink data for the terminal device; or if none of the service session management network elements of the terminal device supports extended buffering, and none of the service user plane network elements supports extended buffering, it is determined that the service session management network element and the service user plane network element of the terminal device do not buffer the downlink data for the terminal device, or it is determined that the access network buffers the downlink data for the terminal device.

It may be understood that, when an eDRX cycle is prolonged, the downlink data of the terminal device that is buffered by the access network device may increase compared with downlink data when the eDRX cycle is not prolonged. To relieve load of buffering the data by the access network device, when the service session management network element of the terminal device supports extended buffering, the service session management network element may buffer the downlink data for the terminal device. Alternatively, when the service user plane network element of the terminal device supports extended buffering, the service user plane network element may buffer the downlink data for the terminal device. In this way, the access network device can be prevented from buffering the downlink data of the terminal device. This relieves load of buffering the downlink data of the terminal device by the access network device.

Optionally, after step S302, the communication method shown in FIG. 3 further includes a step that is not shown: The access and mobility management network element sends indication information A to the service session management network element.

Correspondingly, the service session management network element receives the indication information A from the access and mobility management network element.

The indication information A indicates the service session management network element or the service user plane network element to buffer the downlink data of the terminal device. In other words, after it is determined that the service session management network element or the service user plane network element buffers the downlink data of the terminal device, the indication information may be sent, to indicate the service session management network element or the service user plane network element to buffer the downlink data of the terminal device, or the service session management network element or the service user plane network element that buffers the downlink data for the terminal device may be directly determined.

Alternatively, the access and mobility management network element indicates, based on the indication information A, the service session management network element to buffer the downlink data of the terminal device, so that the service session management network element further indicates, based on the indication information A, the service user plane network element to buffer the downlink data of the terminal device, or indicates the service user plane network element to send the downlink data of the terminal device to the service session management network element, so that the service session management network element buffers the downlink data.

Optionally, if it is determined that the service session management network element or the service user plane network element of the terminal device does not buffer the downlink data of the terminal device, or it is determined that the access network device buffers the downlink data of the terminal device, the access and mobility management network element may not perform the foregoing step of sending the indication information A.

Optionally, step S302 is replaced with: The access and mobility management network element indicates, based on the extended buffering capability of the service session management network element and/or the service user plane network element of the terminal device, the service session management network element or the service user plane network element to buffer the downlink data of the terminal device. Specifically, this step may include: The access and mobility management network element determines, based on the extended buffering capability of the service session management network element and/or the extended buffering capability of the service user plane network element of the terminal device, that the service session management network element or the service user plane network element of the terminal device buffers the downlink data of the terminal device, and sends the indication information A to the service session management network element or the service user plane network element. For details, refer to the foregoing related descriptions.

Sources of the extended buffering capabilities of the service session management network element and the service user plane network element of the terminal device are not limited in this application, and may be determined by the access and mobility management network element based on historical data of the terminal device, or may be obtained through transmission by another device.

For example, before step S302, the communication method shown in FIG. 3 further includes an optional step that is not shown: The service session management network element sends the extended buffering capability of the service session management network element and/or the extended buffering capability of the service user plane network element of the terminal device to the access and mobility management network element.

Correspondingly, the access and mobility management network element receives the extended buffering capability from the service session management network element and/or the extended buffering capability from the service user plane network element.

The extended buffering capability may be actively sent by the service session management network element to the access and mobility management network element, or may be obtained after the access and mobility management network element sends an indication to the service session management network element.

For example, before the service session management network element sends the extended buffering capability of the service session management network element or the extended buffering capability of the service user plane network element to the access and mobility management network element, the communication method shown in FIG. 3 further includes an optional step that is not shown: The access and mobility management network element sends first information to the service session management network element; and the service session management network element sends the extended buffering capability of the service session management network element and/or the extended buffering capability of the service user plane network element to the access and mobility management network element.

Correspondingly, the service session management network element receives the first information from the access and mobility management network element; and the access and mobility management network element receives the extended buffering capability of the service session management network element and/or the extended buffering capability of the service user plane network element.

The first information is used to obtain the extended buffering capability of the service session management network element and/or the extended buffering capability of the service user plane network element. In other words, the access and mobility management network element may send the indication to the service session management network element, to indicate the service session management network element to report the extended buffering capability of the service session management network element and/or the extended buffering capability of the service user plane network element.

Alternatively, the first information includes the radio access type of the terminal device. In other words, the access and mobility management network element may send the radio access type of the terminal device to the service session management network element, so that the service session management network element obtains, based on the fact that the radio access type of the terminal device is the first radio access type, the extended buffering capability of the service session management network element and/or the extended buffering capability of the service user plane network element. Then, the service session management network element reports the extended buffering capability of the service session management network element and/or the extended buffering capability of the service user plane network element to the access and mobility management network element.

In the communication method shown in FIG. 3, if the access and mobility management network element learns that the terminal device enters the inactive state and the radio access type of the terminal device is the first radio access type, to make the terminal device to use the long eDRX parameter in the inactive state, it may be determined, based on the extended buffering capability of the service session management network element and/or the extended buffering capability of the service user plane network element (or the core network device) of the terminal device, whether the service session management network element or the service user plane network element buffers the downlink data of the terminal device. In this way, the service session management network element or the service user plane network element buffers the downlink data of the terminal device, so that the access network device can be prevented from buffering the downlink data of the terminal device, and load of buffering the downlink data of the terminal device by the access network device can be relieved.

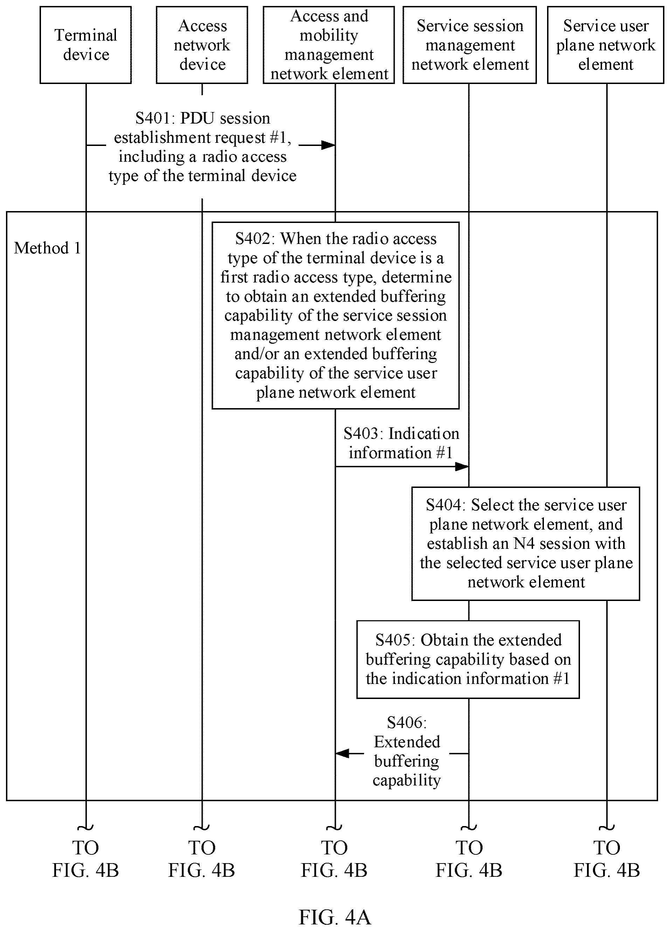

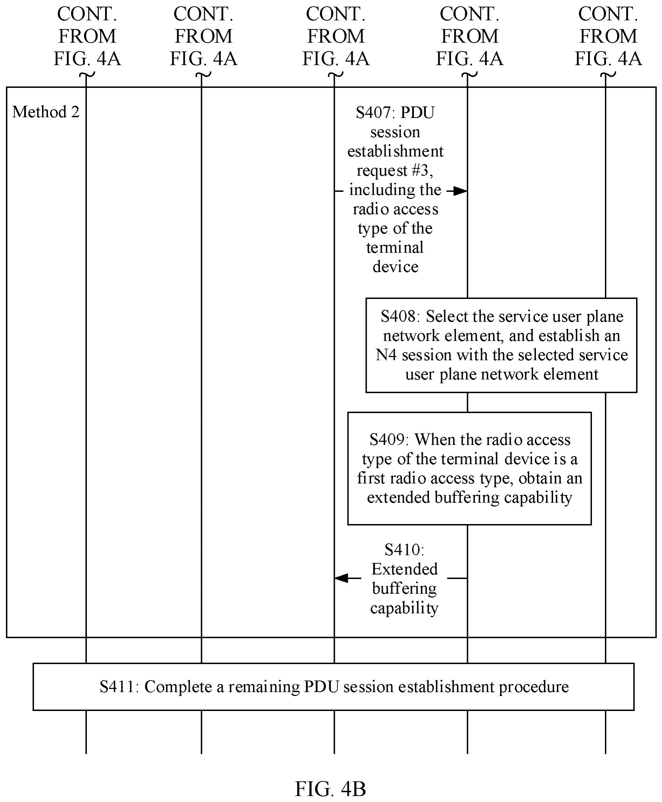

The following describes the communication method shown in FIG. 3 by using an example with reference to a PDU session establishment process. FIG. 4A and FIG. 4B are an interaction diagram of a communication method according to an embodiment of this application. As shown in FIG. 4A and FIG. 4B, the communication method may include the following step S401 to step S411.

Step S402 to step S406 are a method for obtaining an extended buffering capability, and may be referred to as a method 1. Step S407 to step S410 are another method for obtaining the extended buffering capability, and may be referred to as a method 2. In other words, after step S401, step S402 to step S406 are first performed, and then step S411 may be performed. If step S407 to step S410 are first performed, step S411 may be performed. Step S406 or step S410 may be performed before step S302.

S401: A terminal device sends a PDU session establishment request #1 to an access and mobility management network element.

Correspondingly, the access and mobility management network element receives the PDU session establishment request #1 from the terminal device.

The PDU session establishment request #1 is used to request to establish a PDU session. The PDU session establishment request may be an N2 message.

The PDU session establishment request #1 includes a radio access type of the terminal device.

As shown in FIG. 4A, the PDU session establishment request is sent by the terminal device to the access and mobility management network element via an access network device.

S402: When the radio access type of the terminal device is a first radio access type, the access and mobility management network element determines to obtain an extended buffering capability of a service session management network element and/or an extended buffering capability of a service user plane network element.

For the first radio access type, refer to the foregoing related descriptions.

If the radio access type of the terminal device is the first radio access type, to reduce power consumption, a long eDRX parameter is expected to be used for the terminal device in an inactive state; and to alleviate buffer burden on the access network device, the extended buffering capability of the service session management network element and/or the extended buffering capability of the service user plane network element is obtained.

S403: The access and mobility management network element sends indication information #1 to the service session management network element.

Correspondingly, the service session management network element receives the indication information #1 from the access and mobility management network element.

Optionally, S402 and S403 are replaced with one step: When the radio access type of the terminal device is the first radio access type, the access and mobility management network element sends the indication information #1 to the service session management network element.

The indication information #1 is used to obtain the extended buffering capability. For details, refer to the foregoing descriptions of the first information. Details are not described herein again.

In an example, step S403 may be replaced with sending a PDU session establishment request #2. For the PDU session request #2, refer to the description of the PDU session request #1. The PDU session request #2 is included in a PDU session setup context message, for example, a Nsmf_PDUSession_CreateSMContext service. Further, the PDU session setup context message further includes the indication information #1.

In another example, when the radio access type of the terminal device is the first radio access type, the access and mobility management network element adds the indication information #1 to the PDU session establishment request #1 in S401, and sends the PDU session establishment request #1 to the service session management network element.

S404: The service session management network element selects the service user plane network element, and establishes an N4 session with the selected service user plane network element.

For the N4 session, refer to the foregoing descriptions. Details are not described herein again.

S405: The service session management network element obtains the extended buffering capability based on the indication information #1.

The extended buffering capability may include the extended buffering capability of the service session management network element and/or the extended buffering capability of the service user plane network element of the terminal device, or include an extended buffering capability of a core network device.

For the extended buffering capability of the core network device, refer to related descriptions in the foregoing embodiments.

Optionally, the method 1 further includes a step not shown in FIG. 4A and FIG. 4B: The access and mobility management network element determines, based on the obtained extended buffering capability of the service session management network element and/or the obtained extended buffering capability of the service user plane network element of the terminal device, the extended buffering capability of the core network device corresponding to the terminal device. For details, refer to the foregoing related descriptions.

S406: The service session management network element sends the extended buffering capability to the access and mobility management network element.

Correspondingly, the access and mobility management network element receives the extended buffering capability from the service session management network element.

The extended buffering capability sent in step S406 may be carried in a N1N2 communication transfer message, for example, Namf_Communication_N1N2MessageTransfer service.

The extended buffering capability sent by the service session management network element may be the extended buffering capability of the service session management network element and/or the extended buffering capability of the service user plane network element, that is, the extended buffering capability obtained in S405.

Optionally, after step S401, step S402 to step S406 are not performed, but step S407 to step S410 are performed. It may be understood that, in the method 1, the access and mobility management network element sends the indication information #1 to the service session management network element, to request the service session management network element to feed back the extended buffering capability of the service session management network element and/or the extended buffering capability of the service user plane network element, so that the access and mobility management network element obtains the extended buffering capability of the service session management network element and/or the extended buffering capability of the service user plane network element. Further, the extended buffering capability of the core network device may be determined based on the extended buffering capability of the service session management network element and/or the extended buffering capability of the service user plane network element.

S407: The access and mobility management network element sends a PDU session establishment request #3 to the service session management network element.

For the PDU session establishment request #3, refer to the description of the PDU session establishment request #2. The PDU session establishment request #3 includes the radio access type of the terminal device, but the PDU session establishment request #3 does not carry the indication information #1.

S408: The service session management network element selects a service user plane network element, and establishes an N4 session with the selected service user plane network element.

For step S408, refer to the description of step S404. Details are not described herein again.

S409: When the radio access type of the terminal device is a first radio access type, the service session management network element obtains an extended buffering capability.

The extended buffering capability may include an extended buffering capability of a service session management network element and/or an extended buffering capability of a service user plane network element, or include an extended buffering capability of a core network device.

S410: The service session management network element sends the extended buffering capability to the access and mobility management network element.

Correspondingly, the access and mobility management network element receives the extended buffering capability from the service session management network element.

The extended buffering capability in S410 is the extended buffering capability obtained in S409.

It may be understood that, in the method 2, the access and mobility management network element sends the PDU session request #3 to the service session management network element, so that the service session management network element determines that the radio access type of the terminal device is the first radio access type, and the service session management network element actively reports the extended buffering capability of the service session management network element and/or the extended buffering capability of the service user plane network element, or the extended buffering capability of the core network device to the access and mobility management network element.

S411: The terminal device completes a remaining PDU session establishment procedure with the access network device, the access and mobility management network element, the service session management network element, and the service user plane network element.

For example, the access and mobility management network element completes access resource configuration between the access and mobility management network element and the terminal device.

It may be understood that, in the PDU session establishment process shown in FIG. 4A and FIG. 4B, the access and mobility management network element triggers, based on the fact that the radio access type of the terminal device is the first radio access type, the service session management network element to query the extended buffering capability, or the service session management network element actively reports, based on the fact that the radio access type of the terminal device is the first radio access type, the extended buffering capability of the service session management network element and/or the extended buffering capability of the service user plane network element, so that the access and mobility management network element can learn of the extended buffering capability, and determine, based on the extended buffering capability, whether the service session management network element or the service user plane network element buffers downlink data for the terminal device when the terminal device enters the inactive state and the long eDRX parameter is configured. In this way, after the service session management network element or the service user plane network element buffers the downlink data for the terminal device, load of buffering the downlink data of the terminal device by the access network device can be relieved.

In another example, step S302 may be replaced with the following Example 1 or Example 2.

Example 1: The access and mobility management network element determines, based on the extended buffering capability of the core network device corresponding to the terminal device, whether the service session management network element or the service user plane network element of the terminal device buffers the downlink data of the terminal device.

The extended buffering capability of the core network device corresponding to the terminal device may be determined based on an extended buffering capability of one or more service session management network elements and/or an extended buffering capability of one or more service user plane network elements of the terminal device. For details, refer to the foregoing descriptions. Details are not described herein again.

For example, if the core network device corresponding to the terminal device supports extended buffering, it is determined that the service session management network element or the service user plane network element of the terminal device buffers the downlink data; or if the core network device corresponding to the terminal device does not support extended buffering, it is determined that the access network device buffers the downlink data for the terminal device.

Example 2: The access and mobility management network element determines, based on a downlink communication processing capability of the core network device corresponding to the terminal device, whether the service session management network element or the service user plane network element of the terminal device buffers the downlink data of the terminal device.

For a method for determining the downlink communication processing capability, refer to the foregoing descriptions. Details are not described herein again.

For example, if the core network device corresponding to the terminal device supports downlink communication processing, it is determined that the service session management network element or the service user plane network element of the terminal device buffers the downlink data; or if the core network device corresponding to the terminal device does not support downlink communication processing, it is determined that the access network device buffers the downlink data for the terminal device.

It should be noted that the foregoing two examples do not limit a method for determining whether the service session management network element or the service user plane network element buffers the downlink data of the terminal device. Actually, another method may be used for determining. For example, if a preference type is a first preference type, and the service session management network element, the service user plane network element, or the core network supports extended buffering, it is determined that the service session management network element or the service user plane network element buffers the downlink data for the terminal device.

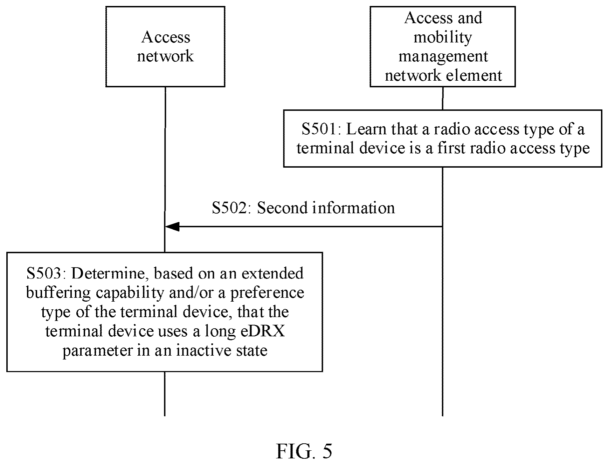

In the communication method shown in FIG. 3, the access and mobility management network element determines whether the service session management network element or the service user plane network element buffers the downlink data for the terminal device, or the access network device buffers the downlink data for the terminal device. In some other feasible examples, the access network device determines whether the service session management network element or the service user plane network element buffers the downlink data for the terminal device, or the access network device buffers the downlink data for the terminal device. Specifically, FIG. 5 is a schematic flowchart of another communication method according to an embodiment of this application. The method may be applied after a terminal device enters an inactive state, or may not be limited to whether the terminal device has entered the inactive state. As shown in FIG. 5, the communication method may include the following step S501 to step S503.

S501: An access and mobility management network element learns that a radio access type of the terminal device is a first radio access type.

For the first radio access type, refer to the foregoing descriptions. Details are not described herein again.

S502: The access and mobility management network element sends second information to an access network device.

Correspondingly, the access network device receives the second information from the access and mobility management network element.

The second information may include an extended buffering capability. The extended buffering capability may include an extended buffering capability of a service session management network element or an extended buffering capability of a service user plane network element of the terminal device, or may include an extended buffering capability of a core network device corresponding to the terminal device. For the extended buffering capability and a method for obtaining the extended buffering capability, refer to the foregoing descriptions. Details are not described herein again.

Optionally, the access network determines, based on the extended buffering capability of the service session management network element or the extended buffering capability of the service user plane network element or a downlink communication processing capability of the core network, whether to configure a long eDRX parameter for the terminal device in the inactive state. For details, refer to the foregoing descriptions. Details are not described herein again.

S503: The access network device determines, based on the extended buffering capability and/or a preference type of the terminal device, that the terminal device uses the long eDRX parameter in the inactive state.

For the long eDRX parameter, the preference type of the terminal device, and a method for determining whether to use the long eDRX parameter, refer to the foregoing descriptions. Details are not described herein again. The extended buffering capability in step S503 is the extended buffering capability obtained in step S502.

A method for obtaining the preference type of the terminal device is not limited in this application. In some feasible examples, before step S503, the communication method shown in FIG. 5 may further include the following steps that are not shown: The access and mobility management network element sends the preference type of the terminal device to the access network device; or the terminal device sends the preference type of the terminal device to the access network device.

Correspondingly, the access network device receives the preference type from the access and mobility management network element or the terminal device. In other words, the access network device may obtain the preference type of the terminal device from the access and mobility management network element or the terminal device.

A method for determining whether the terminal device uses the long eDRX parameter in the inactive state is not limited in this application. The following separately describes the method from perspectives of the extended buffering capability and the preference type. For the method for determining, based on the extended buffering capability and the preference type of the terminal device, whether the terminal device uses the long eDRX parameter in the inactive state, refer to an example of determining, based on the preference type of the terminal device, whether the terminal device uses the long eDRX parameter in the inactive state.

Optionally, whether the terminal device uses the long eDRX parameter in the inactive state is determined based on the extended buffering capability.

For example, if the core network device corresponding to the terminal device supports extended buffering, or at least one service session management network element of the terminal device supports extended buffering, or at least one service user plane network element of the terminal device supports extended buffering, it is determined that the terminal device uses the long eDRX parameter in the inactive state. Alternatively, if the extended buffering capability of the core network device corresponding to the terminal device is not supporting extended buffering, or neither a service session management network element of the terminal device supports extended buffering nor a service user plane network element of the terminal device supports extended buffering, it is determined that the terminal device does not use the long eDRX parameter in the inactive state, but uses a short eDRX parameter.

Optionally, whether the terminal device uses the long eDRX parameter in the inactive state is determined based on the preference type of the terminal device.

For example, if the preference type of the terminal device is a first preference type, it is determined that the terminal device uses the long eDRX parameter in the inactive state. In other words, when the preference type of the terminal device is the first preference type, it indicates that the terminal device expects to obtain better energy saving effect or has an excessively high delay tolerance feature. Regardless of whether the core network device supports extended buffering, it may be determined that the terminal device uses the long eDRX parameter in the inactive state. Although the terminal device causes a data packet loss risk at a specific probability due to mobility when the access network device buffers data, the terminal device still expects to use the long eDRX cycle to obtain better energy saving effect or have an excessively high delay tolerance feature. Otherwise, when the preference type of the terminal device does not include the first preference type, for example, the preference type is data integrity, it may be determined that the terminal device uses the short eDRX parameter or does not use the long eDRX parameter in the inactive state, to avoid causing buffer burden to the access network device.

In the communication method shown in FIG. 5, after learning that the radio access type of the terminal device is the first radio access type, the access and mobility management network element may obtain the extended buffering capability of the service session management network element and/or the extended buffering capability of the service user plane network element of the terminal device. Then, the access and mobility management network element may determine, based on the extended buffering capability of the service session management network element and/or the extended buffering capability of the service user plane network element of the terminal device, the extended buffering capability of the core network device corresponding to the terminal device. The access and mobility management network element sends the second information to the access network device, to carry the extended buffering capability of the service session management network element and/or the extended buffering capability of the service user plane network element, or the extended buffering capability of the core network device. The access network device may further determine, based on at least one of the foregoing extended buffering capabilities and/or the preference type of the terminal device, whether the terminal device uses the long eDRX parameter in the inactive state. When the terminal device enters the inactive state and uses the long eDRX parameter to perform related steps, energy saving effect of the terminal device can be improved.

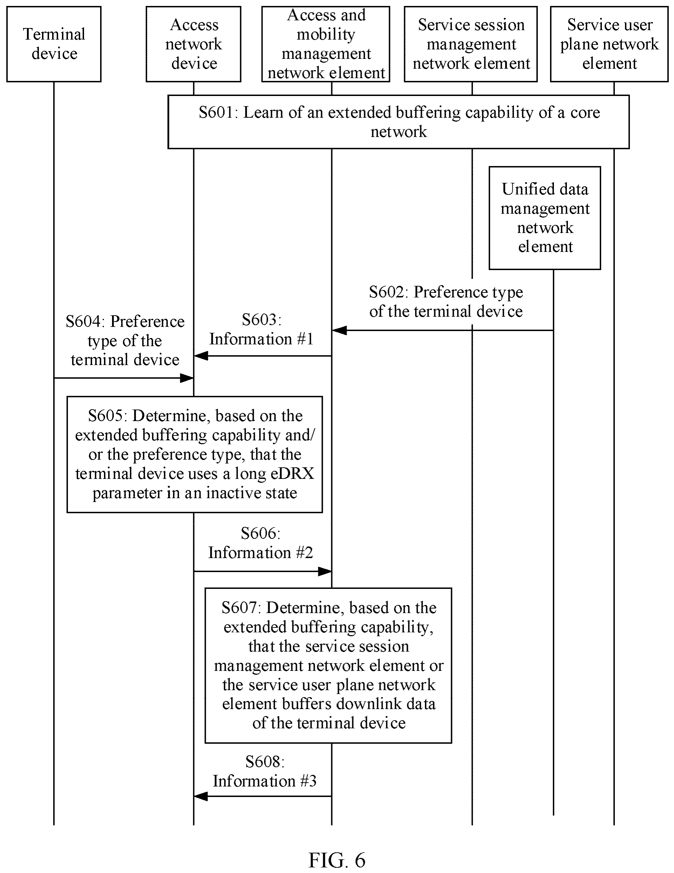

For example, FIG. 6 is a diagram of a scenario of another communication method according to an embodiment of this application. The communication method is applicable to a PDU session establishment scenario. As shown in FIG. 6, the communication method may include step S601 to step S608. S601: An access and mobility management network element learns of an extended buffering capability of a core network device.

Step S601 may be implemented after the access and mobility management network element learns of the extended buffering capability of the core network device. In other words, when the extended buffering capability in step S406 and step S410 includes the extended buffering capability of the core network device, step S601 may be performed after step S406 or step S410.

Optionally, step S601 may be replaced with the following steps: The access and mobility management network element learns of the extended buffering capability and a downlink signaling processing capability of the core network device; and the access and mobility management network element determines a downlink communication processing capability of the core network device based on the extended buffering capability and the downlink signaling processing capability of the core network device. For a method for determining the downlink communication processing capability, refer to the foregoing descriptions. Details are not described herein again.

S602: A unified data management network element sends a preference type of a terminal device to the access and mobility management network element.

Correspondingly, the access and mobility management network element receives the preference type of the terminal device from the unified data management network element.

The preference type of the terminal device in step S602 belongs to subscription data of the terminal device. Step S602 may be understood as that the access and mobility management network element obtains the preference type of the terminal device from the unified data management network element.

S603: The access and mobility management network element sends information #1 to an access network device.

Correspondingly, the access network device receives the information #1 from the access and mobility management network element.

The information #1 may include second information, and may be an N2 message. It should be understood that, after step S602 is performed, the information #1 in step S603 may further include the preference type of the terminal device. Step S602 to step S604 may all be optional steps, and one of step S602 and step S604 may be performed.

S604: The access network device receives the preference type of the terminal device from the terminal device.

Correspondingly, the access and mobility management network element receives the preference type from the terminal device.

The preference type of the terminal device in step S604 may be carried in an RRC message, and may be actively reported by the terminal device, or may be obtained by the access network device by querying the information from the terminal device, or the like. This is not limited herein.

S605: The access network device determines, based on the extended buffering capability and/or the preference type, that the terminal device uses a long eDRX parameter in an inactive state.

The extended buffering capability in step S605 may be the extended buffering capability of the core network device, or an extended buffering capability of a service session management network element or an extended buffering capability of a service user plane network element. For step S605, refer to the description of step S503. Details are not described herein again.

Optionally, after step S601 is replaced with determining the downlink communication processing capability of the core network device, step S605 may be replaced with the following step: The access network device may determine, based on the downlink communication processing capability of the core network device and/or the preference type, whether the terminal device uses the long eDRX parameter in the inactive state.

S606: The access network device sends information #2 to the access and mobility management network element.

Correspondingly, the access and mobility management network element receives the information #2 from the access network device.

If it is determined that the terminal device uses the long eDRX parameter in the inactive state, the information #2 indicates the terminal device to use the long eDRX parameter in the inactive state. If it is determined that the terminal device uses a short eDRX parameter in the inactive state, the information #2 may indicate the terminal device to use the short eDRX parameter in the inactive state. The information #2 may be an N2 message.

Optionally, before step S606, the communication method may further include a step not shown in FIG. 6: The terminal device enters the inactive state, that is, the access network device switches the terminal device to the inactive state. In other words, step S606 may be performed after the terminal device enters the inactive state, or step S606 is performed when the terminal device is in the inactive state. If step S606 is performed when the terminal device is in the active state, when the core network device does not support an extended buffering, it may be determined that the terminal device in the inactive state uses the short eDRX parameter instead of the long eDRX parameter.

Optionally, the communication method further includes a step not shown in FIG. 6: The access and mobility management network element performs downlink reachability management for the terminal device based on the information #2. For example, step S607 is performed: The access and mobility management network element determines, based on the extended buffering capability, that the service session management network element or the service user plane network element buffers downlink data of the terminal device. For a determining method, refer to the foregoing description. Details are not described herein again.

S608: The access and mobility management network element sends information #3 to the access network device.

Correspondingly, the access network device receives the information #3 from the access and mobility management network element.

The information #3 may be understood as an acknowledgment (ACK) message for the information #2, which may be an N2 message. The information #3 may include a message indicating whether the core network device supports downlink signaling processing and/or extended buffering, or may include whether the core network device supports downlink communication processing, or the like.

Optionally, after step S607, the method may further include the following steps that are not shown in FIG. 6: The access and mobility management network element sends indication information A to the service session management network element, to indicate the service session management network element to buffer the downlink data for the terminal device; the service session management network element performs N4 session modification with the service user plane network element; and the service session management network element sends information #4 to the access and mobility management network element.

The N4 session modification may include update of information such as tunnel information, a data packet detection rule, a usage reporting rule, a QoS enforcement rule, and a downlink data buffer rule. The indication #4 may be understood as a reply message of the indication information A. Through implementation of the foregoing steps, the N4 session modification may be performed on the service session management network element and the service user plane network element based on the indication indicating that the service session management network element or the service user plane network element buffers the downlink data of the terminal device. Therefore, the service user plane network element is indicated to buffer the downlink data for the terminal device or forward the downlink data to the service session management network element so that the service session management network element buffers the downlink data.

It may be understood that, in the communication method shown in FIG. 6, the access network device determines, based on the extended buffering capability (or the downlink communication processing capability) of the core network device and/or the preference type of the terminal device, whether the terminal device uses the long eDRX parameter in the inactive state. Then, to make the terminal device to use the long eDRX parameter in the inactive state, the access and mobility management network element may determine, based on the extended buffering capability of the core network device, whether the service session management network element or the service user plane network element buffers the downlink data of the terminal device. In this way, when the terminal device enters the inactive state, the service session management network element or the service user plane network element may buffer the downlink data for the terminal device, so that load of buffering the downlink data of the terminal device by the access network device can be relieved.

Alternatively, the second information may include the downlink communication processing capability of the core network device corresponding to the terminal device. For the downlink communication processing capability of the core network device, refer to the foregoing descriptions. Details are not described herein again.

Optionally, step S503 may be replaced with the following step: The access network device determines, based on the downlink communication processing capability of the core network device and/or the preference type of the terminal device, whether the terminal device uses the long eDRX parameter in the inactive state.

For a method for determining the downlink communication processing capability, refer to the foregoing descriptions. Details are not described herein again.

For example, if the core network device supports downlink communication processing, it is determined to use the long eDRX parameter in the inactive state; or if the core network device does not support downlink communication processing, it is determined to use the short eDRX parameter instead of the long eDRX parameter in the inactive state; or if the preference type of the terminal device is a first preference type, it is determined to use the long eDRX parameter in the inactive state; or if the preference type of the terminal device is not a first preference type, it is determined to use the short eDRX parameter instead of the long eDRX parameter in the inactive state.

Optionally, after step S503, to be specific, after determining that the terminal device uses the long eDRX parameter in the inactive state, the access network device may send indication information, so that the access network device or the core network device processes, based on the long eDRX parameter, a related step performed when the terminal device is in the inactive state.

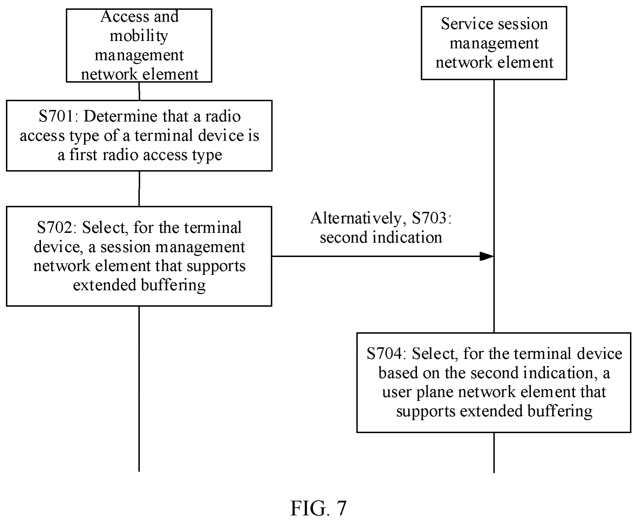

FIG. 7 is an interaction diagram of another communication method according to an embodiment of this application. As shown in FIG. 7, the communication method includes step S701 to step S704. After step S701, step S702 or step S703 may be performed. Alternatively, when step S702 fails to be performed, step S703 is performed. The communication method shown in FIG. 7 may be performed in parallel with the communication method described above. To be specific, the communication method may be performed without considering an extended buffering capability of a service session management network element and/or an extended buffering capability of a service user plane network element. Alternatively, step S702 may be performed after step S302 or step S502, to select a session management network element or a user plane network element that supports extended buffering.

S701: An access and mobility management network element determines that a radio access type of a terminal device is a first radio access type.

S702: The access and mobility management network element selects, for the terminal device, the session management network element that supports extended buffering.

S703: The access and mobility management network element sends a second indication to the service session management network element of the terminal device.

Correspondingly, the service session management network element of the terminal device receives the second indication from the access and mobility management network element.

In this embodiment of this application, the second indication indicates to select, for the terminal device, the user plane network element that supports extended buffering.

S704: The service session management network element selects, for the terminal device based on the second indication, the user plane network element that supports extended buffering.

In the communication method shown in FIG. 7, after determining that the radio access type of the terminal device is the first radio access type, the access and mobility management network element may select, for the terminal device, the session management network element that supports extended buffering; or send the second indication to the service session management network element of the terminal device, to request the session management network element to select, for the terminal device, the user plane network element that supports extended buffering. In this way, the session management network element or the user plane network element that supports extended buffering may buffer downlink data for the terminal device, so that load of buffering the downlink data of the terminal device by an access network device can be relieved.

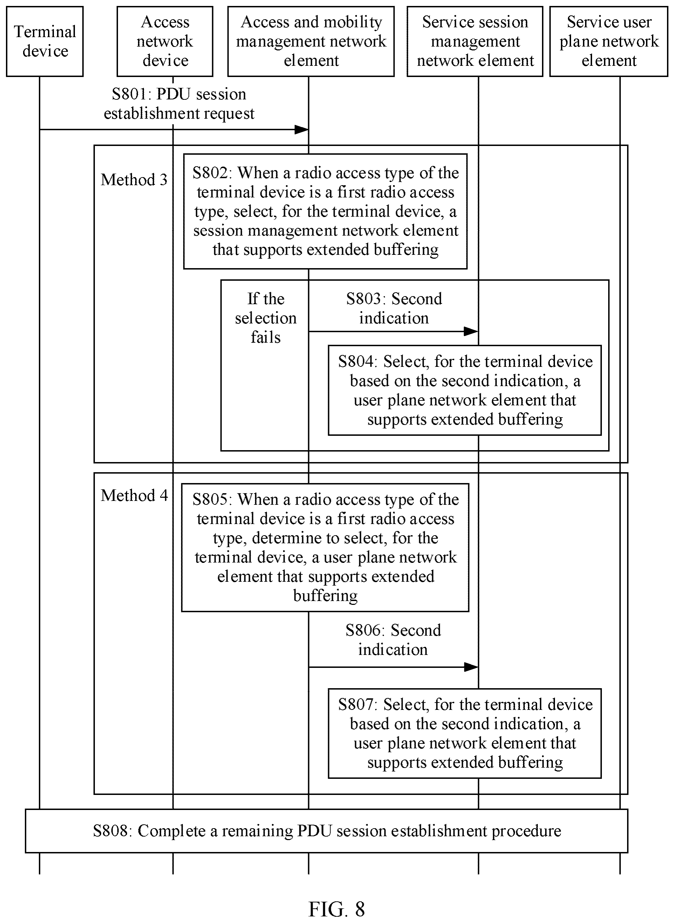

The following uses a PDU session establishment process as an example to describe the communication method shown in FIG. 7. FIG. 8 is a diagram of a scenario of still another communication method according to an embodiment of this application. As shown in FIG. 8, the communication method may include step S801 to step S808. Step S802 to step S804 are a method for selecting a network element that supports extended buffering, and may be referred to as a method 3. Step S805 to step S807 are another method for selecting a network element that supports extended buffering, and may be referred to as a method 4. In other words, after step S801, the method 3 or the method 4 may be performed, and then step S808 is performed.

S801: A terminal device sends a PDU session establishment request to an access and mobility management network element.

For details, refer to the description of step S401. Details are not described herein again.

S802: When a radio access type of the terminal device is a first radio access type, the access and mobility management network element selects, for the terminal device, a session management network element that supports extended buffering.

It should be understood that, when the radio access type of the terminal device is the first radio access type, the access and mobility management network element may select, for the terminal device, a session management network element or a user plane management network element that supports extended buffering.

S803: If the access and mobility management network element fails to select the session management network element that supports extended buffering, the access and mobility management network element sends a second indication to a service session management network element of the terminal device.

In an example, when the access and mobility management network element fails to select, for the terminal device, the session management network element that supports extended buffering, the access and mobility management network element may select the service session management network element for the terminal device by using the conventional technology, and further send the second indication to the selected service session management network element.

The second indication may be sent to the selected service session management network element together with the PDU session establishment request, and the second indication may indicate the service session management network element to select, for the terminal device, a user plane network element that supports extended buffering. The second indication may include the radio access type of the current terminal device.

S804: The service session management network element selects, for the terminal device based on the second indication, the user plane network element that supports extended buffering.

It may be understood that, in the method 3, if the access and mobility management network element determines that the radio access type of the terminal device is the first radio access type, to make the terminal device to use a long eDRX parameter in an inactive state, the session management network element that supports extended buffering may be selected for the terminal device. If the selection succeeds, to be specific, there is the session management network element that supports extended buffering, step S803 may not be performed. If the selection fails, to be specific, there is no session management network element that supports extended buffering, the second indication may be sent to at least one service session management network element, so that the service session management network element selects, for the terminal device based on the second indication, the user plane network element that supports extended buffering. In this way, the session management network element or the user plane network element that supports extended buffering may be selected to buffer downlink data for the terminal device, so that load of buffering the downlink data of the terminal device by the access network device can be relieved.

It should be noted that step S803 and step S804 are optional steps.

S805: When a radio access type of the terminal device is a first radio access type, the access and mobility management network element determines to select, for the terminal device, a user plane network element that supports extended buffering.

It should be understood that, when the radio access type of the terminal device is the first radio access type, the access and mobility management network element may further determine to select, for the terminal device, a session management network element that supports extended buffering.

S806: The access and mobility management network element sends second indication to a service session management network element.

For the second indication, refer to related descriptions in step S803.

S807: The service session management network element selects, for the terminal device based on the second indication, the user plane network element that supports extended buffering.

It may be understood that, in the method 4, when the radio access type of the terminal device is the first radio access type, the access and mobility management network element sends the second indication to the service session management network element, so that the service session management network element selects, based on the second indication, the user plane network element that supports extended buffering. In other words, the access and mobility management network element does not select the service session management network element that supports extended buffering, but indicates that the service session management network element is the user plane network element that supports extended buffering and that is of the terminal device. In this way, the user plane network element that supports extended buffering may buffer the downlink data for the terminal device, so that load of buffering downlink data of the terminal device by the access network device can be relieved.

S808: The terminal device completes a remaining PDU session establishment procedure with the access network device, the access and mobility management network element, the service session management network element, and the service user plane network element. For this step, refer to the description of step S411. Details are not described herein again.

The foregoing describes in detail the method in embodiments of this application, and the following provides an apparatus in embodiments of this application.

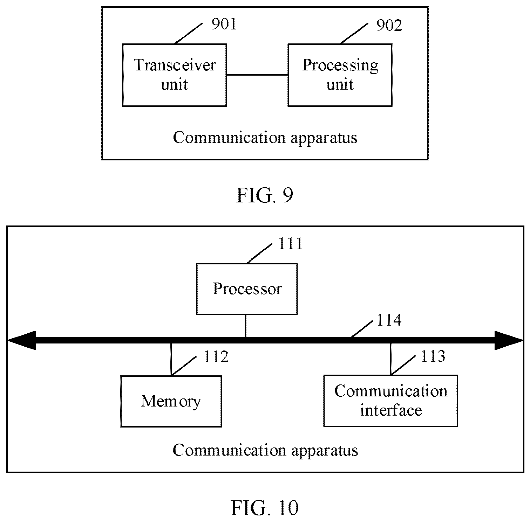

FIG. 9 is a diagram of a structure of a communication apparatus according to an embodiment of this application. The communication apparatus may include a transceiver unit 901 and a processing unit 902. The transceiver unit 901 may be a signal input (receiving) or output (sending) apparatus, and is configured to perform signal transmission with another device or another component in the device.

The processing unit 902 may be an apparatus having a processing function, and may include one or more processors. The processor may be a general-purpose processor, a dedicated processor, or the like. The processor may be a baseband processor or a central processing unit. The baseband processor may be configured to process a communication protocol and communication data. The central processing unit may be configured to: control the apparatus (for example, a donor node, a relay node, or a chip), execute a software program, and process data of the software program.

The communication apparatus may be a terminal device, an access network device, or a core network device corresponding to the terminal device. The core network device may include an access and mobility management network element, a service session management network element or a service user plane network element of the terminal device.

In an optional implementation, the communication apparatus is the access and mobility management network element. The processing unit 902 is configured to: learn that the terminal device enters an inactive state and that a radio access type of the terminal device is a first radio access type; and determine, based on an extended buffering capability of the service session management network element and/or an extended buffering capability of the service user plane network element of the terminal device, that the service session management network element or the service user plane network element buffers downlink data of the terminal device.

In some feasible examples, the transceiver unit 901 is configured to receive a first indication from the access network device, where the first indication indicates the terminal device to enter the inactive state.

In some feasible examples, the transceiver unit 901 is configured to receive the extended buffering capability from the service session management network element.

In some feasible examples, the transceiver unit 901 is configured to send first information to the service session management network element, where the first information is used to obtain the extended buffering capability, or the first information includes the radio access type of the terminal device.

In another optional implementation, the communication apparatus is the service session management network element. The transceiver unit 901 is configured to: receive the first information from the access and mobility management network element, where the first information includes the radio access type of the terminal device, or the first information is used to obtain the extended buffering capability of the service session management network element or the extended buffering capability of the service user plane network element of the terminal device; and send the extended buffering capability to the access and mobility management network element based on the first information.

In some feasible examples, the processing unit 902 is configured to determine, based on the first information, that the radio access type of the terminal device is the first radio access type.

In another optional implementation, the communication apparatus is the access and mobility management network element. The processing unit 902 is configured to learn that the radio access type of the terminal device is the first radio access type. The transceiver unit 901 is configured to send second information to the access network device. The second information includes the extended buffering capability of the service session management network element or the extended buffering capability of the service user plane network element of the terminal device, or an extended buffering capability of the core network device corresponding to the terminal device.

In some feasible examples, the processing unit 902 is further configured to determine the extended buffering capability of the core network device based on the extended buffering capability of the service session management network element and/or the extended buffering capability of the service user plane network element.

In some feasible examples, the transceiver unit 901 is further configured to receive the extended buffering capability from the service session management network element.

In some feasible examples, the transceiver unit 901 is further configured to send the first information to the service session management network element, where the first information is used to obtain the extended buffering capability, or the first information includes the radio access type of the terminal device.

In some feasible examples, the transceiver unit 901 is further configured to send a preference type of the terminal device to the access network device.

In some feasible examples, the preference type includes one or more of the following: energy saving, data packet integrity, packet loss tolerance, delay tolerance, a fixed terminal location, or a limited terminal mobility location.

In another optional implementation, the communication apparatus is the access network device. The transceiver unit 901 is configured to receive the second information from the access and mobility management network element. The second information includes the extended buffering capability of the service session management network element or the extended buffering capability of the service user plane network element of the terminal device, or the extended buffering capability of the core network device corresponding to the terminal device, where the radio access type of the terminal device is the first radio access type. The processing unit 902 is configured to determine, based on the extended buffering capability and/or the preference type of the terminal device, that the terminal device uses a long eDRX parameter in the inactive state.

In some feasible examples, the processing unit 902 is specifically configured to: if the extended buffering capability is supporting extended buffering or the preference type of the terminal device is a first preference type, determine that the terminal device uses the long eDRX parameter in the inactive state.

In some feasible examples, the processing unit 902 is further configured to: if the preference type of the terminal device is not the first preference type, determine that the terminal device uses a short eDRX parameter in the inactive state.

In some feasible examples, the first preference type includes energy saving or packet loss tolerance.

In some feasible examples, the transceiver unit 901 is further configured to receive the preference type from the access and mobility management network element or the terminal device.

In another optional implementation, the communication apparatus is the access and mobility management network element. The processing unit 902 is configured to: determine that the radio access type of the terminal device is the first radio access type; and select, for the terminal device, a session management network element that supports extended buffering; or send a second indication to the service session management network element of the terminal device via the transceiver unit 901, where the second indication is used to select, for the terminal device, a user plane network element that supports extended buffering.

In another optional implementation, when the communication apparatus is the service session management network element, the transceiver unit 901 is configured to receive the second indication from the access and mobility management network element, where the second indication indicates to select, for the terminal device, the user plane network element that supports extended buffering. The processing unit 902 is configured to select, for the terminal device based on the second indication, the user plane network element that supports extended buffering.

In some feasible examples of the foregoing implementations, the first radio access type includes a reduced capability radio access type.

For implementation of the transceiver unit 901 and the processing unit 902, refer to related descriptions in any one of the method embodiments shown in FIG. 3 to FIG. 8. Details are not described herein again.

FIG. 10 is a diagram of a structure of another communication apparatus according to an embodiment of this application. As shown in FIG. 10, the communication apparatus may include a processor 111, a memory 112, and a communication interface 113. The processor 111, the memory 112, and the communication interface 113 are connected to each other through a bus 114.

The processor 111 may also be referred to as a processing unit, and may implement a specific control function. The processor 111 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be noted that when the processor is a general-purpose processor, a DSP, an ASIC, an FPGA or another programmable logic device, a discrete gate or a transistor logic device, or a discrete hardware component, the memory 112 (storage module) may be integrated into the processor.

The memory 112 may be a volatile memory or a nonvolatile memory, or may include both the volatile memory and the nonvolatile memory. The non-volatile memory may be a hard disk drive (hard disk drive, HDD), a solid-state drive (solid-state drive, SSD), a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. The memory 112 is any other medium that can carry or store expected program code in a form of an instruction or a data structure and that can be accessed by a computer, but is not limited thereto. The memory 112 in embodiments of this application may alternatively be a circuit or any other apparatus that can implement a storage function, and is configured to store program instructions and/or data.

It should be noted that the memory described in this specification aims to include but is not limited to these memories and any memory of another proper type.

The communication interface 113 is configured to receive and send data and/or signaling.

Optionally, the communication apparatus may be configured to perform any method described in FIG. 3 to FIG. 8 in embodiments of this application.

The communication apparatus described in the foregoing embodiments may be an access network device, a core network device, a network element in a core network device, or the like. However, a scope of the apparatus described in this application is not limited thereto, and a structure of the communication apparatus may not be limited by FIG. 10. The communication apparatus may be an independent device, for example, a module, a unit, an element, a circuit, a chip, or an interface, or may be a part of a large device, and is configured to implement the methods described in the method embodiments.

An embodiment of this application further provides a computer-readable storage medium. The computer-readable storage medium stores a computer program. When the program is executed by a processor, a procedure related to an access network device or a core network device in the communication method provided in the foregoing method embodiments may be implemented.

An embodiment of this application further provides a computer program product. When the computer program product runs on a computer or a processor, the computer or the processor is enabled to perform one or more steps in any one of the foregoing communication methods. When each component module of the foregoing device is implemented in a form of a software functional unit and sold or used as an independent product, the component module may be stored in a computer-readable storage medium.

An embodiment of this application further provides a chip, including a processor, configured to: invoke, from a memory, instructions stored in the memory, and run the instructions, to enable a communication apparatus in which the chip is installed to perform any one of the foregoing methods.

An embodiment of this application further provides another chip, including an input interface, an output interface, and a processing circuit. The input interface, the output interface, and the circuit are connected through an internal connection path. The processing circuit is configured to perform any one of the foregoing methods. Optionally, the chip further includes a memory. The input interface, the output interface, a processor, and the memory are connected through an internal connection path. The processor is configured to execute code in the memory. When the code is executed, the processor is configured to perform any one of the foregoing methods.

An embodiment of this application further provides a chip system, including at least one processor and a communication interface. The communication interface and the at least one processor are interconnected through a line, and the at least one processor is configured to run a computer program or instructions, to perform any one of the foregoing methods. The chip system may include a chip, or may include a chip and another discrete component.

An embodiment of this application further provides a communication system. The communication system includes an access network device or a core network device. The core network device may include an access and mobility management network element of a terminal device or a service session management network element of the terminal device. For specific descriptions, refer to any method shown in FIG. 3 to FIG. 8.

Further, the communication system may further include a terminal device. For specific descriptions, refer to any method shown in FIG. 3 to FIG. 8.

In some feasible examples, the core network device may alternatively include a service user plane network element of a terminal device. For specific descriptions, refer to any method shown in FIG. 3 to FIG. 8.

Persons of ordinary skill in the art may be aware that units and algorithm steps in the examples described with reference to embodiments provided in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or the communication connections between the apparatuses or units may be implemented in electronic, mechanical, or other forms.

The units described as separate components may or may not be physically separate, and components displayed as units may or may not be physical units, may be located at one location, or may be distributed on a plurality of network units. Some or all of the units may be selected based on actual requirements to achieve objectives of the solutions of embodiments.

In addition, functional units in embodiments of this application may be integrated into one processing unit, each of the units may exist alone physically, or two or more units may be integrated into one unit.

A sequence of steps of the method in embodiments of this application may be adjusted, combined, or removed based on an actual requirement. Steps in each embodiment may be partially performed (for example, the terminal device may not perform the steps performed by the terminal device in the foregoing embodiments). An execution sequence of different steps can be changed. Embodiments described in this specification may be combined with other embodiments, different embodiments may be combined with each other, and different steps in different embodiments in this specification may be combined.

The modules/units in the apparatus in embodiments of this application may be combined, divided, and removed based on an actual requirement.

An "embodiment" in this specification means that a specific feature, structure, or characteristic described with reference to the embodiment may be included in at least one embodiment of this application. The phrase appearing at various locations in this specification neither necessarily means a same embodiment, nor means an independent or optional embodiment exclusive from another embodiment.

A protocol in this application may be a communication protocol or a specification, for example, a 3GPP communication protocol.

Terms "first", "second", "third", "fourth", and the like (if any) in embodiments of this application are used to distinguish between similar objects, and are not necessarily used to describe a specific sequence or order.

In embodiments of this application, "include" may indicate an inclusion relationship or an equal relationship. For example, if A includes B, A may include other content in addition to B, or A and B are same content.

In the descriptions of this application, unless otherwise specified, "/" indicates an "or" relationship between associated objects. For example, A/B may indicate A or B. In this application, "and/or" merely describes an association relationship between associated objects and indicates that three relationships may exist. For example, A and/or B may indicate three cases: Only A exists, both A and B exist, and only B exists, where A and B may be singular or plural. In addition, in the descriptions of this application, unless otherwise specified, "a plurality of" means two or more. "At least one of the following items (pieces)" or a similar expression thereof indicates any combination of these items, including a single item (piece) or any combination of a plurality of items (pieces). For example, at least one (piece) of a, b, or c may indicate a, b, c, a and b, a and c, b and c, or a, b, and c, where a, b, and c may be singular or plural.

In embodiments of this application, information (information), signal (signal), message (message), or channel (channel) may be interchangeably used sometimes. It should be noted that expressed meanings are consistent when differences are not emphasized. "Of (of)", "relevant (corresponding, relevant)", and "corresponding (corresponding)" may be interchangeably used sometimes. It should be noted that expressed meanings are consistent when differences are not emphasized.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

## Claims

1. A communication method, wherein the method is applied to an access and mobility management network element, and the method comprises:
learning that a terminal device enters an inactive state and that a radio access type of the terminal device is a first radio access type; and
determining, based on an extended buffering capability of a service session management network element and/or an extended buffering capability of a service user plane network element of the terminal device, that the service session management network element or the service user plane network element buffers downlink data of the terminal device.

2. The method according to claim 1, wherein the method further comprises:
receiving a first indication from an access network device, wherein the first indication indicates the terminal device to enter the inactive state.

3. The method according to claim 1 or 2, wherein the method further comprises:
receiving the extended buffering capability from the service session management network element.

4. The method according to claim 3, wherein the method further comprises:
sending first information to the service session management network element, wherein the first information is used to obtain the extended buffering capability, or the first information comprises the radio access type of the terminal device.

5. The method according to any one of claims 1 to 4, wherein the first radio access type comprises a reduced capability radio access type.

6. A communication method, wherein the method is applied to an access and mobility management network element, and the method comprises:
learning that a radio access type of a terminal device is a first radio access type; and
sending second information to an access network device, wherein the second information comprises an extended buffering capability of a service session management network element or an extended buffering capability of a service user plane network element of the terminal device, or an extended buffering capability of a core network device corresponding to the terminal device.

7. The method according to claim 6, wherein the method further comprises:
determining the extended buffering capability of the core network device based on the extended buffering capability of the service session management network element and/or the extended buffering capability of the service user plane network element.

8. The method according to claim 6 or 7, wherein the method further comprises:
receiving the extended buffering capability from the service session management network element.

9. The method according to claim 8, wherein the method further comprises:
sending first information to the service session management network element, wherein the first information is used to obtain the extended buffering capability, or the first information comprises the radio access type of the terminal device.

10. The method according to any one of claims 6 to 9, wherein the method further comprises:
sending a preference type of the terminal device to the access network device.

11. The method according to claim 10, wherein the preference type comprises one or more of the following: energy saving, data packet integrity, packet loss tolerance, delay tolerance, a fixed terminal location, or a limited mobility location.

12. The method according to any one of claims 6 to 11, wherein the first radio access type comprises a reduced capability radio access type.

13. A communication method, wherein the method is applied to an access network device, and the method comprises:
receiving second information from an access and mobility management network element, wherein the second information comprises an extended buffering capability of a service session management network element or an extended buffering capability of a service user plane network element of a terminal device, or an extended buffering capability of a core network device corresponding to the terminal device, and a radio access type of the terminal device is a first radio access type; and
determining, based on the extended buffering capability and/or a preference type of the terminal device, that the terminal device uses a long extended discontinuous reception eDRX parameter in an inactive state.

14. The method according to claim 13, wherein the determining, based on the extended buffering capability and/or the preference type of the terminal device, that the terminal device uses the long extended discontinuous reception eDRX parameter in the inactive state comprises:
if the extended buffering capability is supporting extended buffering or the preference type of the terminal device is a first preference type, determining that the terminal device uses the long extended discontinuous reception eDRX parameter in the inactive state.

15. The method according to claim 14, wherein the method further comprises:
if the preference type of the terminal device is not the first preference type, determining that the terminal device uses a short eDRX parameter in the inactive state.

16. The method according to claim 14 or 15, wherein the first preference type comprises energy saving or packet loss tolerance.

17. The method according to any one of claims 13 to 16, wherein the method further comprises:
receiving the preference type from the access and mobility management network element or the terminal device.

18. The method according to any one of claims 13 to 17, wherein the first radio access type comprises a reduced capability radio access type.

19. A communication method, wherein the method is applied to a service session management network element of a terminal device, and the method comprises:
receiving first information from an access and mobility management network element, wherein the first information comprises a radio access type of the terminal device, or the first information is used to obtain an extended buffering capability of the service session management network element or an extended buffering capability of a service user plane network element of the terminal device; and
sending the extended buffering capability to the access and mobility management network element based on the first information.

20. The method according to claim 19, wherein the sending the extended buffering capability to the access and mobility management network element based on the first information comprises:
determining, based on the first information, that the radio access type of the terminal device is a first radio access type.

21. The method according to claim 20, wherein the first radio access type comprises a reduced capability radio access type.

22. A communication method, wherein the method is applied to a service session management network element of a terminal device, and the method comprises:
receiving a second indication from an access and mobility management network element, wherein the second indication indicates to select, for the terminal device, a user plane network element that supports extended buffering; and
selecting, for the terminal device based on the second indication, the user plane network element that supports extended buffering.

23. A communication method, wherein the method is applied to an access and mobility management network element, and the method comprises:
determining that a radio access type of a terminal device is a first radio access type; and
selecting, for the terminal device, a session management network element that supports extended buffering; or
sending a second indication to a service session management network element of the terminal device, wherein the second indication is used to select, for the terminal device, a user plane network element that supports extended buffering.

24. The method according to claim 23, wherein the first radio access type comprises a reduced capability radio access type.

25. A communication apparatus, comprising a unit configured to perform the method according to any one of claims 1 to 12, claim 23, or claim 24, or comprising a unit configured to perform the method according to any one of claims 13 to 18, or comprising a unit configured to perform the method according to any one of claims 19 to 22.

26. A communication apparatus, comprising a processor and a storage medium, wherein the storage medium stores instructions, and when the instructions are run by the processor, the method according to any one of claims 1 to 12, claim 23, or claim 24 is implemented, or the method according to any one of claims 13 to 18 is implemented, or the method according to any one of claims 19 to 22 is implemented.

27. A computer-readable storage medium, wherein the computer-readable storage medium comprises instructions, and when the instructions are run by a processor, the method according to any one of claims 1 to 12, claim 23, or claim 24 is implemented, or the method according to any one of claims 13 to 18 is implemented, or the method according to any one of claims 19 to 22 is implemented.

28. A communication method, wherein the method comprises the method according to any one of claims 1 to 12, claim 23, or claim 24, or the method comprises the method according to any one of claims 13 to 18, or the method comprises the method according to any one of claims 19 to 22.

29. A communication system, wherein the communication system comprises an access network device and a core network device, the core network device comprises an access and mobility management network element or a service session management network element of a terminal device, the access and mobility management network element is configured to perform the method according to any one of claims 1 to 12, claim 23, or claim 24, the access network device is configured to perform the method according to any one of claims 13 to 18, and the service session management network element is configured to perform the method according to any one of claims 19 to 22.
